# EUROPEAN PATENT APPLICATION

(11) **EP 1 186 997 A2**
(43) Date of publication of application: **13.03.2002**
(21) Application number: 00310635.8
(22) Date of filing: 30.11.2000
(51) Int. Cl.: G06F 9/44

(54) **Graphical development system and method**

(30) Priority: 30.11.1999 US 168196 P
(71) Applicant: Texas Instruments Incorporated, Dallas, Texas 75251 (US)
(72) Inventor: Zink, Edmund D., Plano, Texas 72025 (US); Coley, Gerald K., Terrell, Texas 75160 (US); Kuzemchak, Edward P., Avonmore, Pennsylvania 15618 (US); Tibbits, John L., Centerville, Ohio 45458 (US)
(74) Representative: Potter, Julian Mark

(57) **Abstract**

A graphical solutions development system using placement of blocks representing hardware/software functionality on a computer screen tibio drawing and connecting the blocks by wires representing data and control flow to create application programs and/or hardware design. The blocks are instances of development tibio components which include intelligence for optimization within a detected environment. This permits effective programming of digital signal processors and system design by users not expert in digital signal processing programming and system design.

## Description

The invention relates to electronic devices and, more particularly, but not exclusively, to software and hybrid hardware/software development and systems and methods.

The expanding use of computers and embedded processors increasingly demands customized applications specific to the requirements of particular users. This has led to the widespread employment of visual builder tools for creating custom application programs through the interlinking of software modules from libraries.
For example, Visual Basic for Applications from Microsoft Corporation and C++ Builder from Borland International provide visual environments which have a graphical user interface (GUI) and include a toolbox with different classes of components (software mdules), form windows for combining components visually, and property sheets for the components which can be modified to customize the components.
USP 5,850,548 and USP 5,950,001 illustrate variations of visual development environments.
However, the known visual development methods have problems including limited component intelligence and flexibility.

Viewed from a first aspect, the present invention provides a graphical development system for software/hardware hybrids with intelligent development components appropriate for real-time processors plus development framework rules to ensure development component object optimization within the resulting application program. This has advantages including program development of digital signal processor applications by non-specialist programmers.

Embodiments of the invention will now be described, by way of example only, with reference to the accompanying drawings, in which:

The drawings are heuristic for clarity.
Figures 1-5 show computer systems and software in block form.
Figure 6 is a screen shot illustrating generic screen elements.
Figure 7 shows preferred embodiment graphical solutions development system in block form.
Figures 8A-8D are aspects of a development component.
Figure 9 illustrates a development drawing.
Figures 10A-10C show aspects of real-time operation.
Figure 11 is a hardware component.
Figure 12 illustrates programmable logic component.
Figure 13 shows annotation component.
Figures 14A-14B show a user interface and block drawing.
Figure 15 is a property dialog window.
Figures 16A-16C illustrate multiple code modules in a development component.
Figures 17A-17J show a development drawing, property dialogs, and code.
Figure 18 is a development component gallery.
Figures 19A-19E illustrates a development framework.
Figures 20A-20F show a development component publisher.
Figure 21 illustrates a framework rule.
Figures 22A-22C show a development drawing and probes.
Figure 23 is an example of environment inquiry code.
Figure 24 shows file structure.
Figures 25A-25F illustrate development component scripts.

### Overview

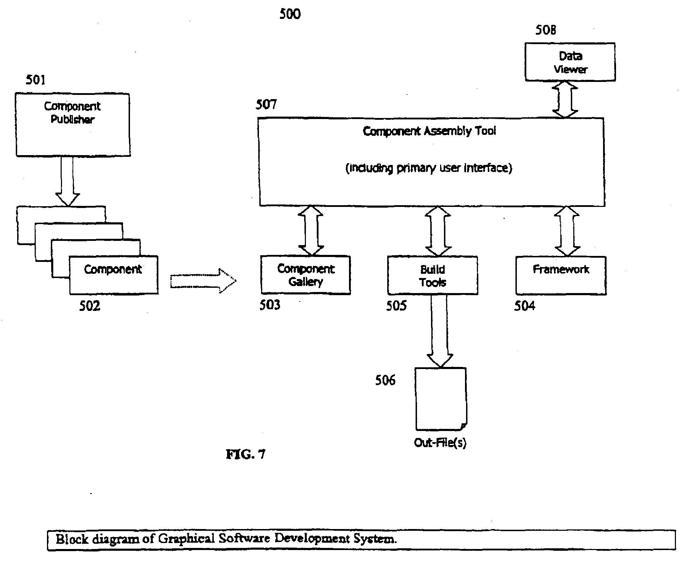

The preferred embodiments provide a graphical solutions development system (integrated development environment) with a library of development components (called "tibio components" to distinguish from the many other uses of "component") which, in addition to software code for performing their functionalities, also include design information and environmental detection for automatic optimization. Figure 7 shows a block diagram. Hybrid hardware/software functionalities are included in the solutions that can be developed. The typical application developed runs on a real-time processor such as a DSP plus, possibly, concurrently on a general-purpose processor (e.g., an ARM) and may communicate with a host processor. Frameworks for the graphical programming development ("tibio frameworks") include constraints to insure automatic optimization.

### General Architecture

### A. General

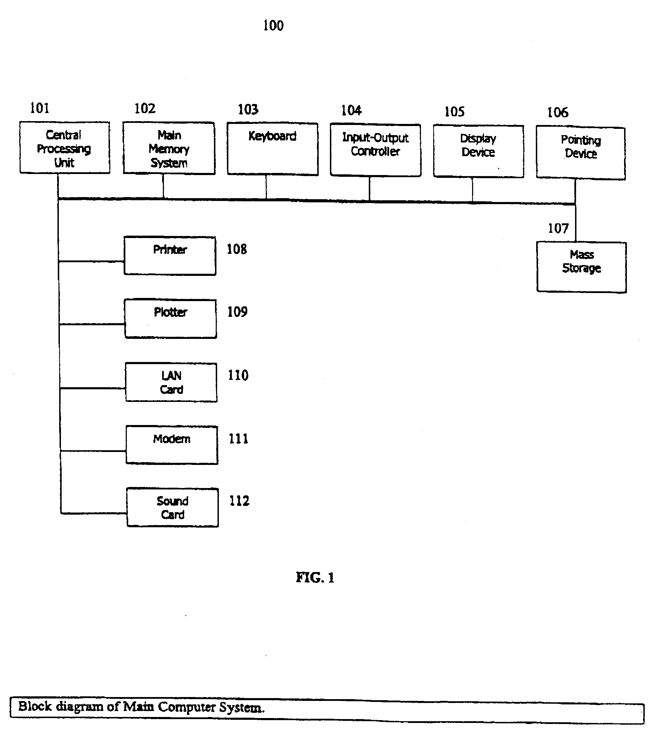

The first preferred embodiment development systems may be implemented on a main computer system such as the system 100 of Fig.1. System 100 includes at least one central processor 101, a main memory system 102, a keyboard 103, an input/output controller 104, a display device 105, a pointing device 106 (e.g. a trackball, a mouse, or a pressure-sensitive tablet with corresponding pen device), and a mass storage device 107 (e.g. a hard-disk drive). System 100 may also include peripheral devices such as a printer 108, a plotter 109, a local area network (LAN) connection 110, a modem 111, and a sound card 112.

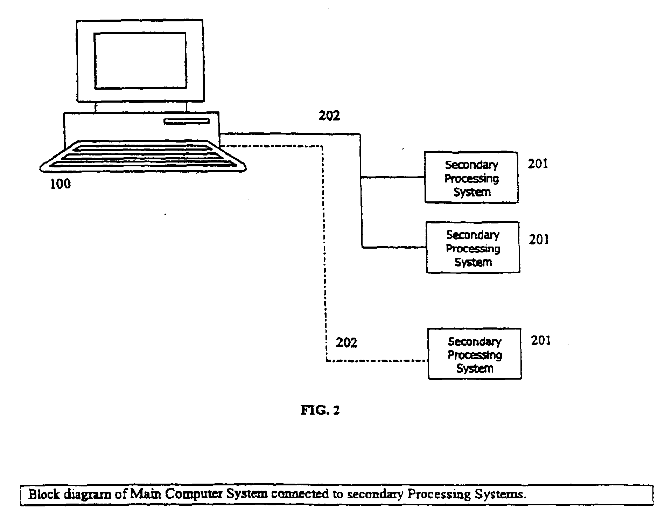

As shown in Fig. 2, computing system 100 may include one or more secondary (or target) processing systems 201, where each secondary processing system may or may not be in physical proximity to the main computing system. Further, the secondary processing system may or may not be electrically connected to the main computing system. For purposes of clarification, and if desired, connections 202 between the main computing system and the target computing system may be implemented in a number of different ways, which include but are not limited to: direct electrical connection via a serial cable, direct electrical connection via a parallel port cable, direct electrical connection via a universal serial bus (USE) cable, connection via optical fiber, connection via a local area network, connection via the Internet (or other wide area network), connection via radio frequency (RF) communication channel, or via direct connection to a shared bus or shared memory.

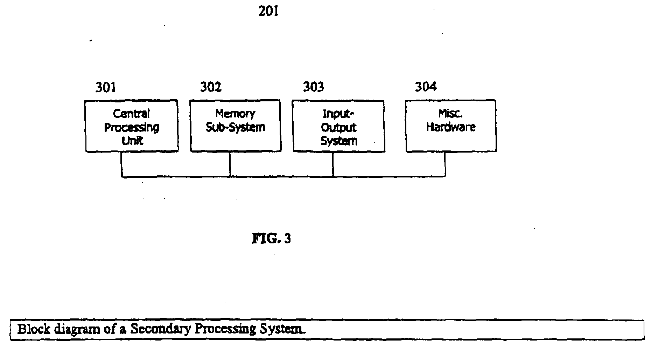

Illustrated in Fig. 3, a secondary processing system 201 is comprised of at least one central processing unit 301 which may include (or be electrically connected to) a memory subsystem 302, an input/output system 303, and other miscellaneous hardware 304. The central processing unit 301on a secondary processing system is not required to match the processing unit 101 on the main computer system 100. Also, in instances where there is more than one secondary processing system, the central processing units 301on the secondary processing systems may be identical, or similar, or completely different. Each secondary processing system may execute a single dedicated task, or may execute a variety of tasks under the supervision of an operating system (or the functional equivalent of an operating system).

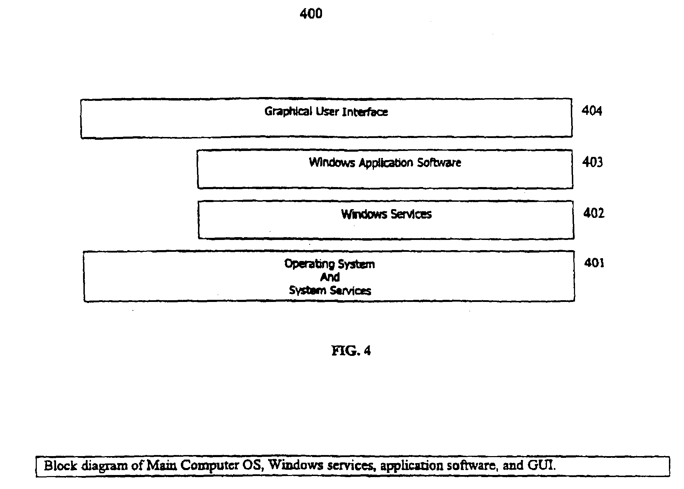

The main computer system 100 is equipped with a software system 400 that directs the operation of the main computer. As shown in Fig. 4, software system 400 includes an operating system (OS) 401 that provides a set of basic system services. The software system is frequently stored on a hard disk drive 107 and essential pieces of the software system are loaded into random-access memory (RAM) as they are needed. Some portions (or all) of the software system may be accessed via a local area network, the Internet, or other remote means. In the preferred embodiments the main computer system 100 includes a graphical user interface 404 for receiving user commands and to provide feedback (or results) to the user. In a typical scenario, the user interface is provided by application software such as application software or windows application software 403. This graphical user interface is normally provided by the application and/or the windows shell 402 that runs on a suitable operating system 401. In one embodiment, Microsoft Windows NT (aka Windows 2000) implements both the operating system 401 and the windows shell 402.

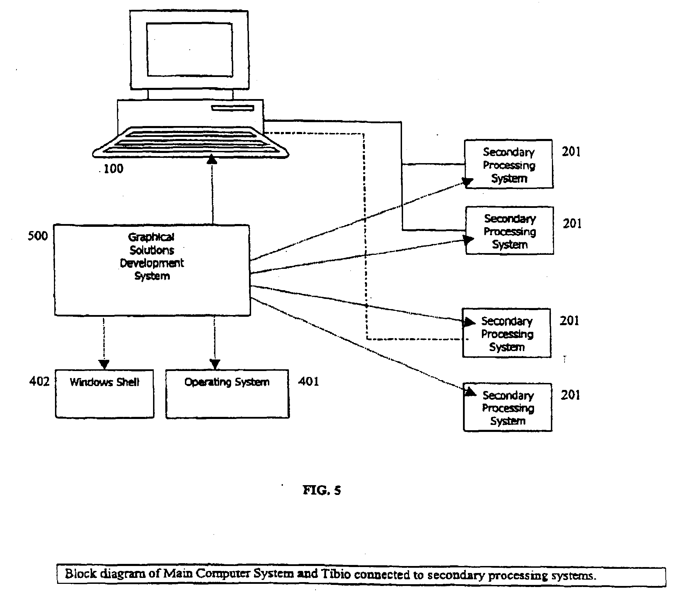

Fig. 5 illustrates the main computer system 100 equipped with a preferred embodiment graphical solutions development system (GSDS) 500 to assist users in the task of creating software programs. As shown, the graphical solutions development system interfaces to the main computer system, as well as to various secondary processing systems, via the operating system 401 and the windows shell 402.

### B. Graphical User Interface

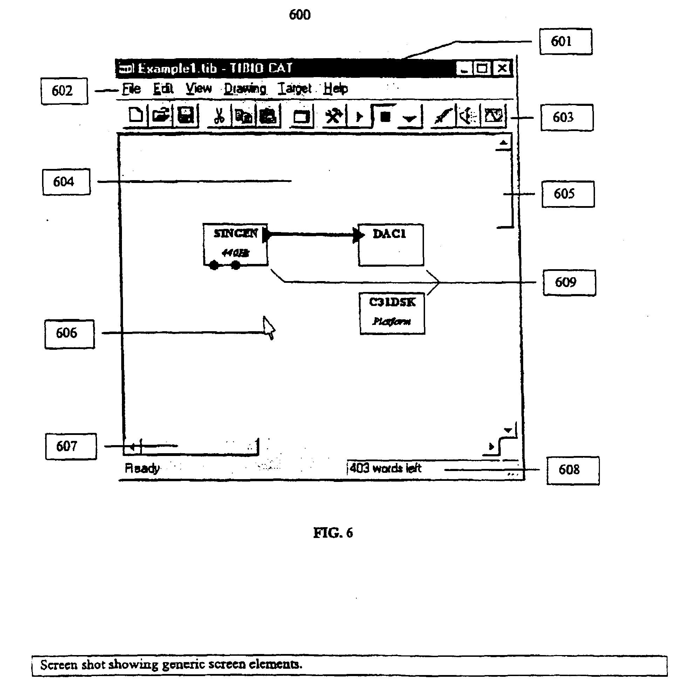

As shown in Fig. 6, the main computer system 100, in concert with the operating system 401, the preferred embodiment graphical solutions development system (GSDS) typically presents a user interface 600 as a visual workspace for developing solutions projects. The visual workspace 600 is suitable for displaying fully annotated graphical drawings (called "tibio drawings") including block diagrams for electrical hardware and block diagrams of software. The user interface 600 may be rectangular or may be presented using other shapes. In general the main user interface 600 presents the following visual interactive elements: titlebar 601, menubar 602, toolbar 603, client area 604, statusbar 608, as well as both vertical scrollbars 605 and horizontal scrollbars 607. The main user interface 600 may be resizable or may have fixed screen dimensions.

A screen cursor 606 is normally provided by the windowing system or operating system, but it may be implemented in the application. The screen cursor 606 moves on the screen corresponding to movement of the pointing device 106. This provides the user with a convenient means of graphically accessing screen objects and also provides a means for controlling objects represented on the screen. The screen cursor 606 can provide additional information to the user by changing color or shape. Before, during, or after moving the cursor (via movement of the pointing device), the user may generate user-event signals (e.g. mouse "clicks" or "drags") that represent commands to the graphical solutions development system. Various user operations are accessed via either mouse operations or keyboard 103 entries. For convenience many user operations may be accessed in more than one way (e.g. "copying" a tibio drawing block by "clicking" on the "Copy" icon located on the toolbar 603, entering keystrokes via the keyboard 103 to access the "Edit" menu, or using keystroke accelerators ("hot-keys") to invoke a copy operation).

The titlebar 601 normally presents text that gives both the name of the application (e.g. "TIBIO CAT") and the current tibio drawing name (e.g. "Example1.tib").

The menubar 602 provides access to a set of drop-down menus that provide many useful functions like adding components to the tibio drawing, saving the tibio drawing, and configuring the target hardware.

The toolbar 603 provides a row of icon-buttons to permit rapid access to functions that are most commonly used. In this example, the toolbar functions from left to right are: new tibio drawing, open a file, save the tibio drawing, cut, copy, paste, add a component to the tibio drawing, build, run, stop, reset the target hardware, add a probe, add an audio probe, and lastly, turn on the data viewer. It is common to provide more than one toolbar.

The client area 604 is available to the user to construct (or present) block tibio drawings that represent solutions. The actual dimensions of a tibio drawing may exceed the client area 604; the scrollbars 605, 607 permit the user to access portions of the tibio drawing that may not otherwise be visible.

The statusbar 608 is portion of the screen that is handy for posting short status messages and status icons.

The user has the option to suppress or make visible the menubar 602, the toolbar 603, and the statusbar 608.

### Visual Development Environment

### A. Overview

The preferred embodiment graphical solutions development system 500 comprises a graphical programming environment that facilitates rapid solution development through the use of pre-engineered tibio components. The client area 604 provided by the graphical solutions development system 500 represents a piece of paper where the user may "draw" (i.e. draft) a solution. The resulting user-generated tibio drawing 609 represents a solution, which may be an aggregate of both hardware functions and software functions. The graphical solutions development system 500 provides a rich set of resources to assist in building a solution. These resources include a variety of tibio components, means to interconnect tibio components (referred to as "wires"), and many others. These resources effectively permit a user to "draw" a "block diagram" in the client area 604 on the main computer display 105. This enables the user to "draw" a block diagram (on a computer screen) comprised of distinct software functional units as well as distinct hardware functional units.

The resulting block diagram is referred to as a tibio drawing 609.

There are several terms and constructs that have specific definitions in the graphical solutions development environment.
These are nominally defined as follows:
Terminology used in the description includes the following:
Block: an instance of a tibio component; maintains persistent property information. A block nominally represents a functional unit, which may include a software function or algorithm, a hardware function, and/or some other functionality.
Tibio component: a self-contained deployable unit of primary functionality. Primary functionality refers to, but is not limited to, algorithms, mathematical functions, and control functions, which may be executed in either hardware or software.
A tibio component may also contain resources that provide secondary functionality, such as configuration, help, etc.
Tibio component Gallery: an applet provided by the integrated development environment (IDE) that provides a sorted list of available tibio components or tibio component-tokens
Tibio component-Token: a tibio component featuring restricted primary functionality. A tibio component-token may be distributed for marketing or promotional purposes. The primary functionality of a tibio component-token may be totally void, it may be partially disabled, or it may be provided via an emulator.
Tibio drawing: the visual representation of a block diagram on the display screen.
Tibio framework: a collection of rules and a software applet that can check for rule violations.
Pin: an abstraction for the input connection points to or output connection points from a tibio component.
Platform: an abstraction that represents a target hardware assembly.
Probe: an abstraction for an oscilloscope (or other) probe.
Project: an abstraction for the software associated with a single processor.
Viewer: an applet that provides a visual (or other sensory) representation of data.
Wire: an abstraction for visually denoting data or control flow.
Workspace: an abstraction for a collection of software projects.

Fig. 7 provides an overall block diagram of the graphical solutions development system 500. Because the ultimate goal is to provide the user with a powerful graphical design capability based on pre-engineered tibio components, the initial task is to provide the ability to create compatible tibio components. The tibio component publisher 501 is an applet designed to create fully compatible tibio components 502. The tibio component publisher 501 creates a sequence of dialog windows (i.e. a wizard) that is designed to gather relevant information from the user regarding the tibio component being published. Information supplied by the tibio component creator may include the name of the tibio component, the date of publication, the revision number, resources that need to be included to assure primary functionality, interfaces, and other miscellaneous items. When the dialog with the user is completed, the tibio component publisher 501, employs a standardized formatting procedure to package all of the information and resources into a single convenient file.

The tibio component gallery 503 provides a list of all tibio components that are available to the user. The tibio components listed in the tibio component gallery 503 may have been locally published, may have been purchased from commercial tibio component vendors, may have been downloaded via the Internet, or acquired by other means. Regardless of how they were acquired, they will all be listed in the tibio component gallery. In the preferred embodiment, the tibio component gallery 503 will provide additional features, which may include sorting tibio components based on user-defined preferences, providing descriptive information about each tibio component, and direct Internet access to additional vendor information. The tibio components that appear in the tibio component gallery 503 do not have to reside on the local machine. In addition, the tibio component gallery 503 may list tibio component tokens.

Tibio component-tokens are tibio components where some of the functionality has been removed or disabled. In one sense, tibio component-tokens may be considered as an electronic brochure for a real tibio component. tibio component tokens provide several interesting possibilities: 1) they may be distributed at no charge for promotional purposes, 2) they may provide limited functionality or no functionality, and 3) they provide a local stub that can point to the real tibio component. tibio component tokens are published exactly the same way that normal tibio components are created, with two small exceptions: 1) some of the resources may be removed or disabled, and 2) a token attribute is set. The token attribute is a means for all tools that access or use tibio components to recognize that this particular tibio component is a token. A hyperlink to an Internet website may be included in a tibio component-token to assist users in getting additional information or in upgrading tibio component-tokens to "full-strength" tibio components.

The primary user interface for the graphical solutions development system 500 is provided by the tibio component assembly tool 507. In the jargon of tibio component-based software, the term " tibio component assembly" refers to the composition or aggregation of tibio components into a higher-level solution. The tibio component assembly tool 507 is therefore a graphical "drag-and-drop" editor that is specifically optimized to facilitate " tibio component assembly". Figs. 6, 17A, and 22A illustrate screen shots of tibio drawings in which various tibio components have been dropped. Besides offering the user a graphical drawing environment, the tibio component assembly tool provides an extended user interface that permits the user to build, load, run, and debug complex projects.

During the design phase, sometimes referred to as "design capture", the designer has many opportunities to make errors. These can be as simple as forgetting to use unique names for each tibio component instance (block) on the tibio drawing. To help the user avoid mistakes, especially new users, the graphical solutions development system includes a tibio framework 504. In the preferred embodiments, a tibio framework is defined as a collection of rules and a rule engine that can detect rule violations. This is very analogous to the spell-checker in a word-processor. A spell-checker is comprised of a set of rule (i.e. the dictionary) and the spell-check engine. The "dictionary" provides rules regarding spelling and hyphenation. The spell-check engine compares each word in a document to the words in the dictionary. Similarly one part of a tibio framework consists of a set of rules that are compiled by experts. The other part of the tibio framework is an applet that can apply the rules to the current tibio drawing and detect errors.

The tibio component assembly tool also provides an interface to code-generation and other build tools 505. This facility permits the project or projects to be compiled, assembled, linked, built, or it can invoke any other build process needed. (Each tibio component includes some embedded build information.) The outfiles 506 which are the result of the build process can be directly loaded into appropriate target platforms, or may be manually loaded into target platforms. Data viewer applets 508 provide a capability similar to an oscilloscope and thus permit the user to visually inspect a project while it is "running". This capability facilitates both debugging and performance assessment.

### B. tibio components

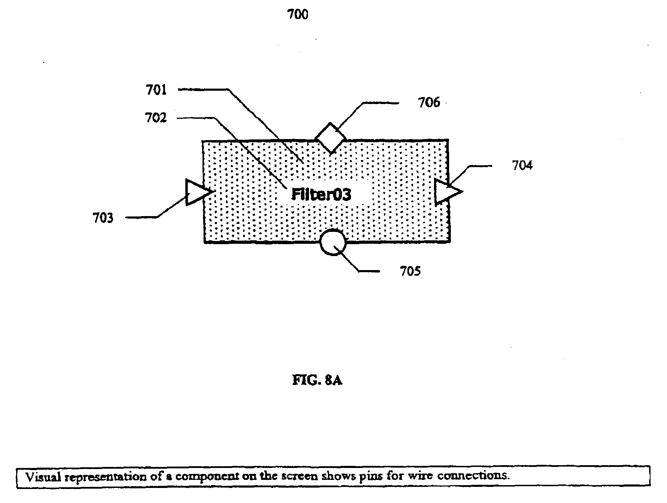

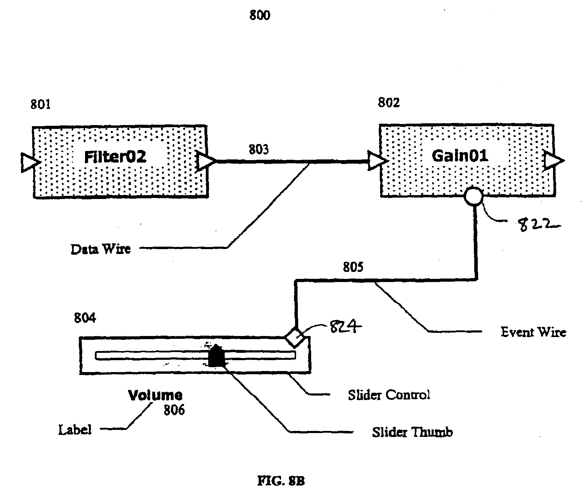

Tibio components are self-contained, deployable units of software or hardware functionality. After a tibio component is instantiated in a tibio drawing it is symbolically portrayed on the main computer display 105 as either a line drawing or as an image (bitmap icon). (A tibio component instance is often referred to as a "block".) Fig. 8A illustrates one possible rendering of a tibio component-instance 700 (i.e. block), as it would appear in a tibio drawing on the display screen 105 of the main computer system 100. The tibio component-instance illustrated in Fig. 8A comprises a body 701 and a collection of optional pins that are usually located around the periphery of the block's body. The body 701 of the block 700 merely serves to denote an entity. The body 701 may be rendered on the display screen 105 using a fill color, a texture, or other fill means. The particular "fill method" may vary from one block 700 to the next. The "fill color" may be used to visually connote a particular block property (e.g. red may denote an error condition). The "fill color" or other visual attributes may be changed dynamically in response to various operating or environmental "conditions". Blocks 700 usually support text fields 702 that can provide useful reference information, like the instance name.

A block may have four different kinds of pins, which are visually rendered using small, distinct icons. A data-input pin 703 represents a connection point where data, especially real-time data, may be applied as an input parameter to the functionality of the block. A data output pin 704 represents a connection point for data, especially real-time data, after it has been processed by the block's algorithm or function. Wires representing events or control information may be connected at the input event pin 705. Output events that result as a consequence of the block's normal processing operation (e.g. execution of an algorithm) "appear" at the output event pin 706, where they may be connected via wires to other blocks.

A block 700 may have any number (including zero) of each type of pin. The shape of the icon used to denote a pin is merely a visual cue for the user. In the preferred embodiment, any pin may be located at any position along the periphery of the block 700. Pin colors as well as pin icons may be changed dynamically to visually connote changes in properties or environmental "conditions". For example, the fill color of a pin may be changed to red to denote that no wire is connected (where a wire was expected).

The tibio drawing of Fig. 8B illustrates the interconnection of three blocks using an abstraction referred to as wires. Wire 803 visually depicts the fact that output data from the filter block 801 is to be used as input data for the processing operation performed by the gain block 802. In a similar manner, wire 805 illustrates that data events from the slider control are "fed" to the input event pin of the gain block 802. The slider control 804 is activated by using a pointing device 106 to move the slider "thumb". Movement of the slider thumb generates output events that provide thumb position information. Note that the software that implements the slider control may be executing on the main computer system 100, while the signal processing operations performed by the filter 801 and gain 802 blocks may be executing on a secondary processing system. The important point here is that wires may span blocks associated with diverse physical hardware. The label 806 is an annotation tibio component. Annotation tibio components are a special class of tibio components that do not contribute code to a project. Annotation tibio components are used to add descriptive information to a tibio drawing. Annotation tibio components include lines, arrows, textboxes, labels, icons, title boxes, etc.

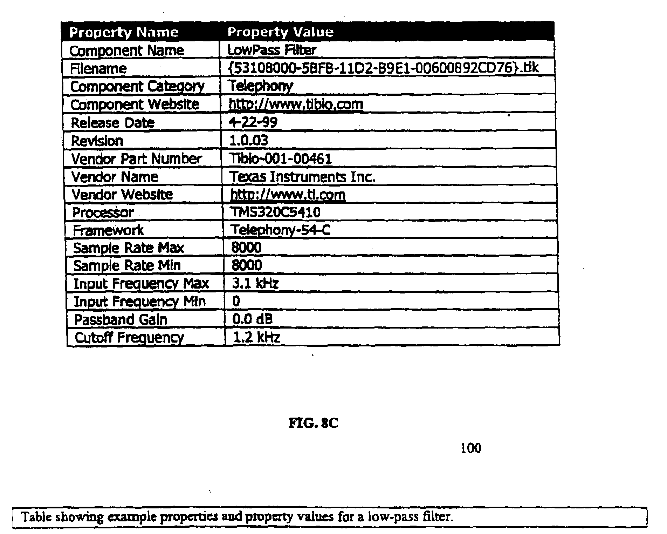

Each tibio component includes a set of properties. Fig. 8C provides a table of example properties for a simple low pass filter tibio component. Most of these properties are defined when the tibio component is created. Some properties are used only at design-time, some are used only at build-time, and some are used only at run-time. The tibio component creator determines what properties will be included, whether they can be modified, and when they are accessible.

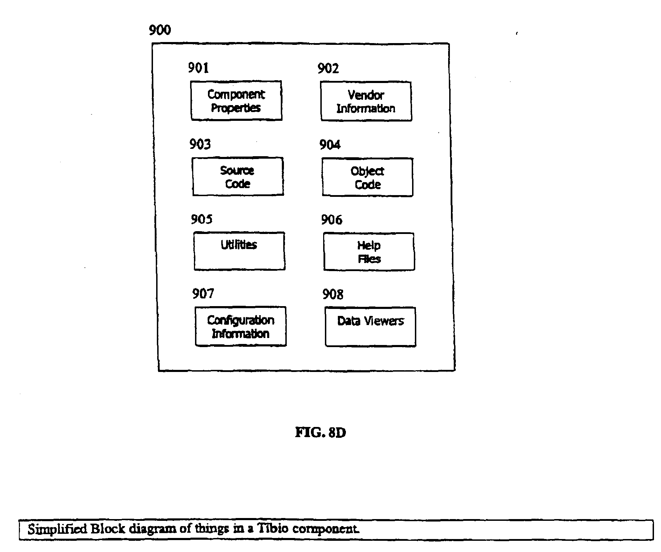

In addition to a set of properties, a tibio component may include many other objects or kinds of information. The tibio drawing of Fig. 8D shows some of the possibilities. tibio component properties 901 were described earlier. Vendor information 902 may include contacts, technical support information, promotional information for other tibio component-related offerings, legal notices, etc. Source code files 903 and object code files 904 may also be included. For the protection of the vendor's intellectual property, the tibio component may be distributed without the inclusion of any source code files. Utilities 905 may include other tibio components, test applications, specialized compilers, or any other utility that the tibio component creator wishes to include. Help files 906 may include hypertext document files, text files, troubleshooting guides, application notes, etc. Configuration information 907 refers mainly to scripts. Scripts are brief code modules that can be executed by the GSDS to assist the GSDS in properly using and configuring each tibio component instance in each individual environmental context. Configuration information may also include makefile information, memory requirements, data format information, operating system preferences, etc. If the tibio component deals with a non-standard (or proprietary) type of data, then specialized data viewers 908 may be included inside the tibio component. Many other objects may also be included in a tibio component.

### C. Tibio drawings

Tibio components are the "building blocks" that are used to construct a solution to a problem. The use of a "block diagram" drawing paradigm greatly enhances the user's ability to understand the high-level operation of a tibio drawing. Many other formats, both graphical and non-graphical, are possible. Indeed, expanding lists of properties such as Fig.8C could take the place of the graphical representation of Fig.8A where the expanded list would include input and output connections by references to other lists, and so forth.

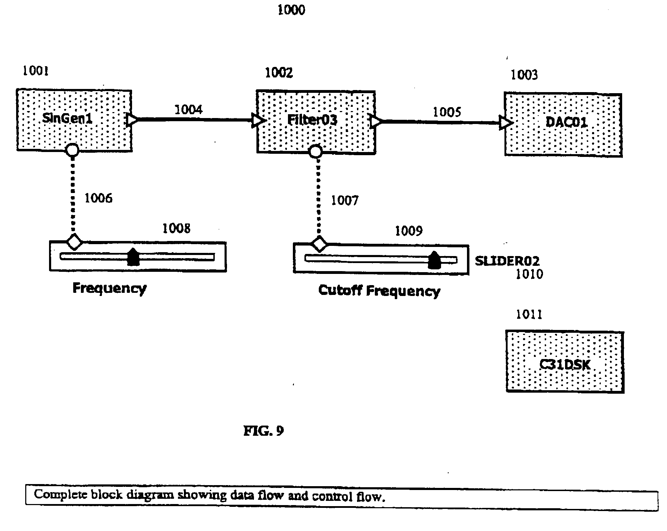

The preferred embodiment graphical solutions development systems distinctly render tibio drawings featuring two different kinds of information, data-flow information and control information; these are called tibio drawings. The distinction between data-flow and control-flow may be visually represented using wires of one color for data-flow, and a different color for control-flow. Fig. 9 presents a simple, but complete, functional tibio drawing. In Fig. 9 data-flow information (i.e. data wires 1004,1005) are rendered using solid lines. And the control-flow in Fig. 9 is depicted using dotted lines for control wires 1006,1007. Wires shown on the display screen do not connote electrical connections, but rather illustrate the flow of both data and control information.

In Fig. 9 the sinewave generator 1001 represents a code module that, when executed, mathematically computes discrete samples of a sinusoidal signal. The numerical data for each sample generated by the sinewave generator 1001 is used as input data for the filter algorithm 1002. Because this "flow of information" from one algorithm to the next is perfectly analogous to analog signal processing where the output of one analog processing circuit (or "block") is connected via a wire to the input of the next analog processing circuit. For this reason, in Fig. 9 it is natural to depict the flow of data from the sinewave generator 1001 to the low-pass filter 1002 symbolically as a wire 1004. Using this convention the computed data out of the low-pass filter 1002 is "connected" to the digital-to-analog converter (DAC) 1003 using another wire 1005. Wires 1004 and 1005 visually connote a data path (i.e. data-flow). In Fig. 9 the frequency property of the sinewave generator 1001 may be modified by the user, while the system is in operation, via the frequency slider control 1008. Movement of slider thumb generates slider events which are forwarded to the sinewave generator 1001 via wire 1006. The low-pass filter 1002 is configured in a similar manner so that the cut-off frequency of the filter may be modified (at run-time by the user) by moving the thumb of the "Cutoff Frequency" slider 1009. Control events from the Cutoff Frequency slider are connected to the low-pass filter 1002. Event wires 1006, 1007 depict control-flow information. Distinctly showing the data-flow and control-flow information is an improvement that helps the user comprehend complex processing operations using very simple schematic representations. The instance name "SLIDER02" 1010 is an optional label. The platform block 1011, represents the actual hardware where this tibio drawing will execute. The platform block includes an operating kernel and a variety of build information.

Data-flow information pertains to data that must be processed such that various operations are completed in compliance with real-time deadlines (e.g. filtering of an audio data stream) where violations of the real-time deadlines may cause problems or failures (e.g. failure to maintain real-time filtering of an audio stream can cause pops, clicks, or dropouts).

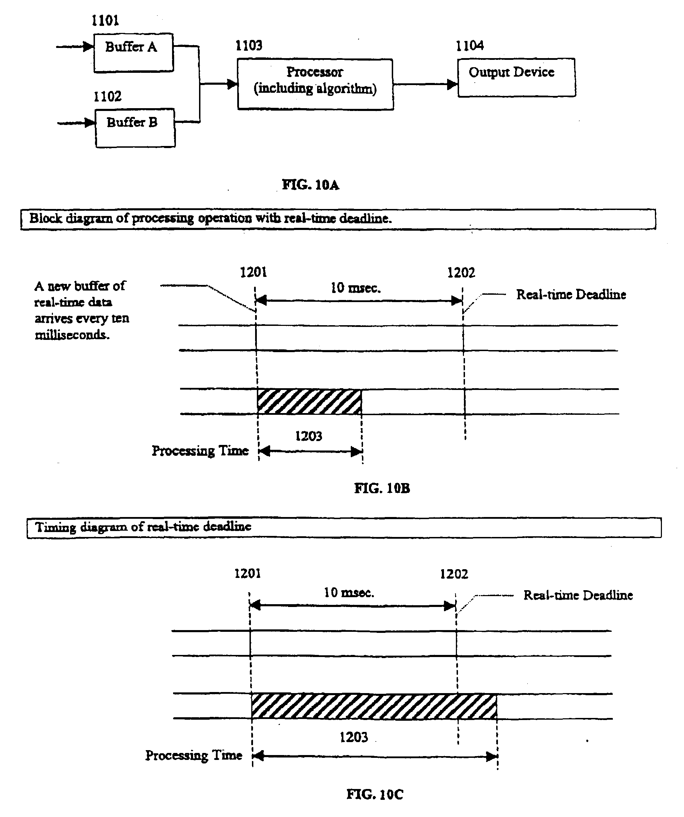

Fig. 10A provides an illustration of a very simple real-time processing scenario. Data from some real-time process (like the audio signal inside a television set) is suitably "fed" to two input data buffers 1101, 1102. In this example each data buffer might be comprised of sufficient memory to store 64 data samples. Normally after Buffer A 1101 is filled with real-time data, processor 1103 commences the execution of a desired processing algorithm (e.g. filtering out noise). Following the processing of the data in Buffer A, this resulting data is forwarded to an output device 1104. While the data in Buffer A is being processed, the input data stream is "fed" to Buffer B. After Buffer B is filled with real-time data, the processor will commence processing of the data in Buffer B. Processing continues in alternating fashion with each buffer being replenished with new data samples while the data in the other buffer is processed. Successful processing is predicated, as shown in Fig. 10B, on the fact that the processor is sufficiently fast such that it can complete the processing of a single buffer of data before the next data buffer is full. The term "Real-time deadline" means that there exists a point in time where processing of one buffer must be completed so that processing of a new buffer can begin. Fig. 10B shows a case where the processing time concludes well before the Real-time deadline. Alternatively, Fig. 10C shows a case where the processing time exceeds the real-time deadline. The result here would likely be manifest as some audible impairment.

Control information pertains to "asynchronous" control operations like changing a volume control setting. Control operations are not time critical, and hence real-time deadlines are not imposed. The graphical solutions development system has the ability to define and, in fact, process these two distinctly different types of "information" in completely different ways.

The preferred embodiments have devised a way so that neither the tibio component that creates the event, nor the tibio component that will receive the event has to know how the "event information" is being transmitted. Indeed, both the tibio framework and the tibio components have the capability to adapt and automatically implement compatible encoding /decoding protocols. To accomplish this, code is added to the project. This code may be generated by the tibio framework or by the tibio components. The software that does the encoding is called a PROXY. The code that does the decoding is called a STUB.

In prior art, event wires have been used to illustrate the routing of event information. In contrast, the preferred embodiments the method used to implement the communication channel does not have to be defined or standardized when the tibio components are created, but rather they can be defined when the tibio components are "assembled" into a solution. So our event wires do not represent a fixed event mechanism, they are more like chameleons.

In a tibio drawing, the control flow scenario consists of the elements listed below. These are illustrated in Figure 8B.
- Source Block 804 - block that generates an output event
- Source Pin 824 - output event pin on the source block that generates the output event
- Destination Block 802 - block that receives the input event
- Destination Pin 822 - input event pin on the destination block receiving the input event
- Control wire 805 - channel on which the control information flows from an output event pin to an input event pin
- Proxy code - code generated for the source pin to map the control information from the source block to the wire and/or destination pin on the destination block
- Stub code - code generated for the destination pin to map the control information from the source pin and/or wire to the destination pin on the destination block.

In Figure 8B, the Volume control tibio component 804 generates output events whenever the slider thumb is moved. The event wire 805, represents a communication channel (or protocol) that delivers the output events from the Volume control to the Gain control tibio component 802. The Stub code and the Proxy code are not usually supplied by tibio components, but rather are provided by a tibio framework. (The callouts in Figure 8B make it look like the Proxy and Stub are either part of a pin or part of a tibio component. They could be inside of the tibio component or they may not be. They are usually associated with the respective pins, so this is more of a conceptual convenience.)

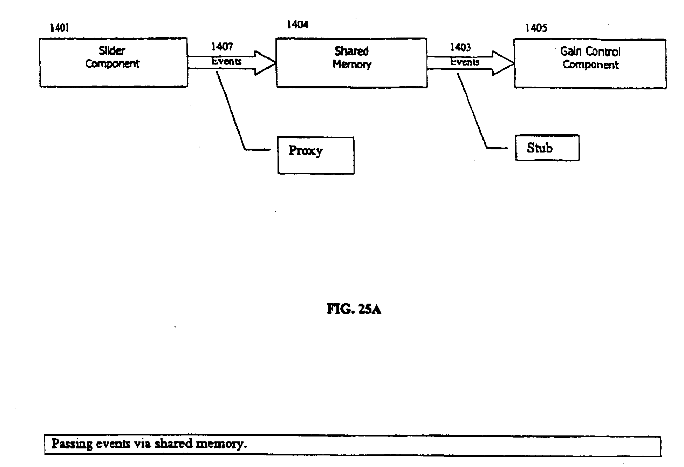

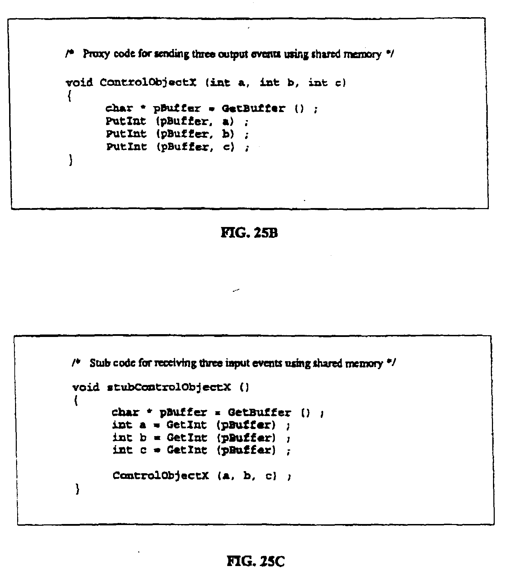

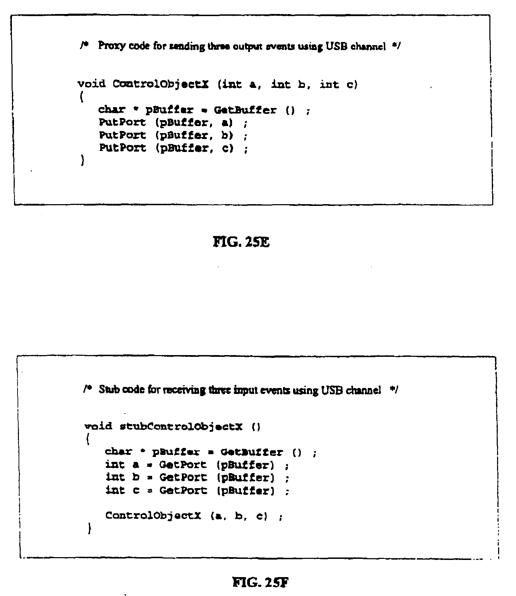

Figure 25A provides a simple illustration where a volume control "slider component" sends events to a gain control component via a shared memory. For this protocol, the slider can send output events by calling the (proxy) ControlObjectX function shown in Fig. 25B. In this case events are represented as integers. Input events are received by calls to the (stub) stubControlObjectX function given in Fig. 25C.

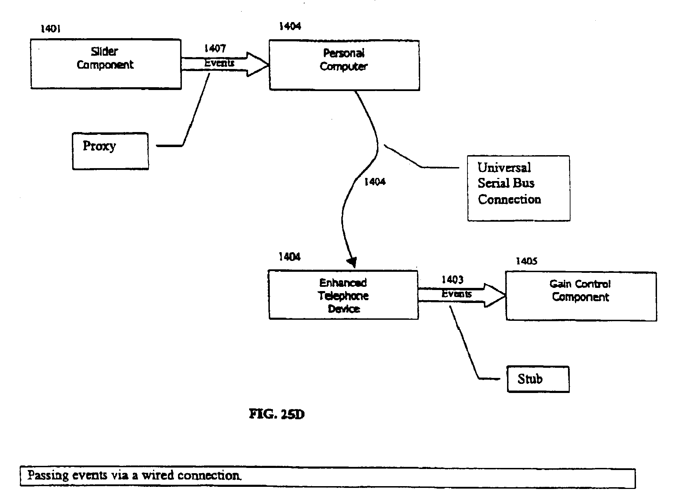

Figure 25D implements a completely different physical connection to pass events from the volume control slider component to the gain control component. In this case, the events are sent from a personal computer to a telephony device via a universal serial bus (USB) connection.

The code for the proxy and the stub that send and receive events using the USB connection are given in Figures 25E and 25F, respectively. Note that, just as in the previous description, the proxy is provided by a call to the ControlObjectX function, and the stub is provided by calls to the stubControlObject function. Note that the proxy and stub have the same calling conventions (same function names and same parameters are passed) The slider component and the gain component have no control over how the events are being passed.

This example can be expanded to cover a wide variety of situations that include different physical locations, different electrical (or other) connections, different protocols, etc. The source and destination blocks can be located anywhere in a GSDS (tibio) drawing; in fact, the source and/or destination block(s) could be external to the GSDS drawing, such as applications not represented in the GSDS drawing. Examples include, but are not limited to the following:
- Source and destination blocks can be executing in the same task, or different tasks
- Source and destination blocks can be executing in the same process, or different processes
- Source and destination blocks can be executing on the same processor, or different processors
- Source and destination blocks can be executing on the same platform, or different platforms

A proxy is the interface between an output event pin and a wire. A stub is an interface between a wire and an input event pin. The source and destination pins define the format of the information at the pin or the interface between the block and the wire. The definition of the interfaces can take on any form that can be described by an interface definition file. Interface examples include, but are not limited to, the following:
- Global variable
- C function call
- Collection of C function calls
- C++ function call
- Collection of C++ function calls
- COM interface
- Assembly calling convention
- Data page pointer calling convention

In the GSDS the interface definition may be defined by a block when it is instantiated, or it may be left undefined, relying on the tibio framework to assign an optimum interface implementation. Examples include, but are not limited to, the following:
- Source block output event pin defines output event interface
- Source block output event pin adapts output event interface
- Destination block input event pin defines input event interface
- Destination block input event pin adapts input event interface

The normal combinations are:
- Source block defined output event interface is tied to a destination block adapting input event interface. In this case the stub code automatically adapts to the proxy code.
- Source block defined output event interface is tied to a destination block defined input event interface. In this case a suitable translation (or mapping) is generated either in the proxy or the stub or both to match the information definitions.
- Source block adapted output event interface tied to a destination block adapting input event interface. Here the tibio framework specified the optimum mapping. The proxy and stub default to the best obtained solution.
- Source block adapted output event tied to a destination block define input even - the proxy code adapts to the stub code

The proxy and stub code may also be a function of the properties of the wire interconnecting them. The wire represents a channel of control information flow. The properties of this channel (i.e. wire) are a function of many items including, but not limited to, the following:
- Relative physical locations of the source block and the control block
- Platform characteristics
- Processor characteristics
- RTOS currently loaded
- Communication mechanism (parallel port, shared memory, etc.)
- Operating system support

Although there are thousands of possible event passing mechanisms (or channels) the code inside a block is always the same. The application code in each block simply makes that same API call no matter what event-passing scheme is in effect. The entire proxy/stub mechanism can be later refined with out any changes to the application code. This makes it possible to create tibio components that remain versatile and compatible in the face of many possible event-passing conventions.

A block may define any number of control interfaces by defining source (output events) and destination (input events) pins. Each pin can have a different format for the control information.

### D. Types of tibio components

Several different types of tibio components can be used in a tibio drawing. The most obvious tibio components are software tibio components. Software tibio components are tibio components that ultimately produce instructions for one or more processors. Typical tibio components include software that is designed to perform a pre-defined task (e.g. a sinewave signal source). Other types of tibio components include hardware components, platform components, framework components, annotation components, and intrinsic components.

Platform components are tibio components that contain information about the target hardware where the project's executable code will be "run".

In some cases, the operating system or kernel may be represented via a tibio component. In this instance the operating system component can have user-accessible properties; it may or may not expose any pins.

Hardware components may also be used to represent hardware rather than software functions, for example a digital-to-analog converter, or a data-access-arrangement (DAA) for a modem. While these hardware components are implemented using electronic hardware (e.g. resistors, capacitors, integrated circuits, transformers, etc.) rather than being implemented in software, they usually require software to appropriately configure them for proper operation in accordance with their property settings. A codec, for example, may need a special software driver to configure sample rates, anti-aliasing filters, channel selection, data format, etc.

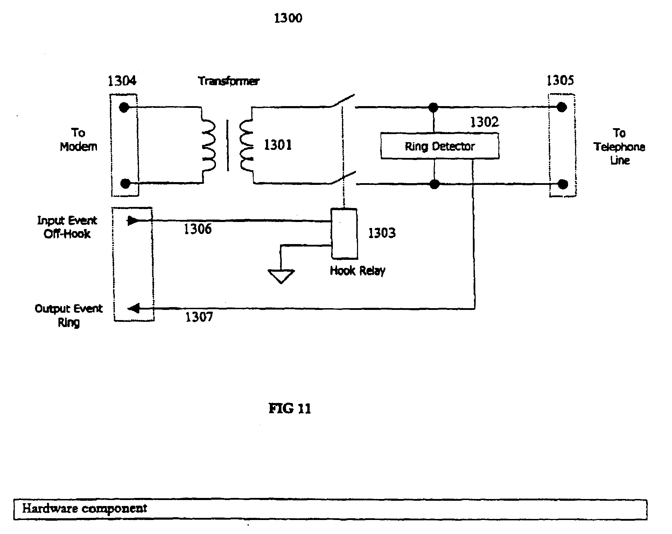

Fig. 11 provides an example of a hardware component: the telephone-line interface 1300 (commonly referred to as a DAA, an abbreviation for "direct access arrangement"). This interface 1300 is truly a hardware component because it comprises several hardware devices like a transformer 1301, a ring-detector 1302, and a relay 1303. The DAA accepts one input event 1306 that is a command to put the telephone line into the "Offhook" state (equivalent to picking up the handset on a common telephone device). The DAA also produces one output event 1307. The output event 1307 is generated each time the central telephone office sends a RING signal. A DAA 1300 is commonly used as an interface between the telephone line and the circuitry of the modem. In such an application, the modem software is responsible for generating appropriate output events to the DAA, and for processing incoming events from the DAA. The ability to represent a hardware component in a GSDS drawing provides a powerful improvement.

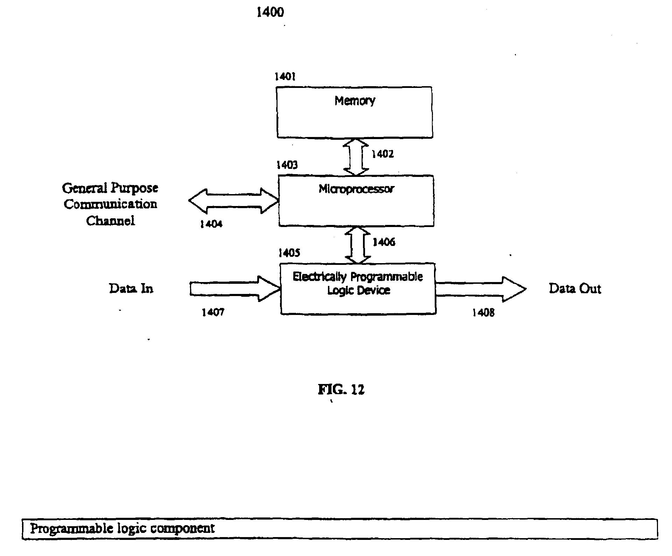

Some hardware components may represent programmable logic that can implement suitable algorithms, state machines, etc. The GSDS may provide software optimization modules that help optimize the partitioning of processing tasks between hardware (executed via hardware logic) and software (executed on a microprocessor). The illustration of Fig. 12 gives an example of how a programmable logic device 1405 (PLD) can be used to implement a data-processing tibio component. This tibio component would be represented in a GSDS drawing as a simple block having two data pins: Data In and Data Out. In operation the programmable logic device 1405 would be programmed (whenever required) via an interface 1406 to the microprocessor 1403. The processor 1403 might access desired algorithms or programming instructions from either its resident memory devices 1401 or from an external source via a general-purpose communication channel 1404.

Framework components are tibio components that supply rules and/or rule-checking engines that support verification of proper tibio component usage which may include wiring, tibio component property settings, data formats, event-passing protocols, etc.

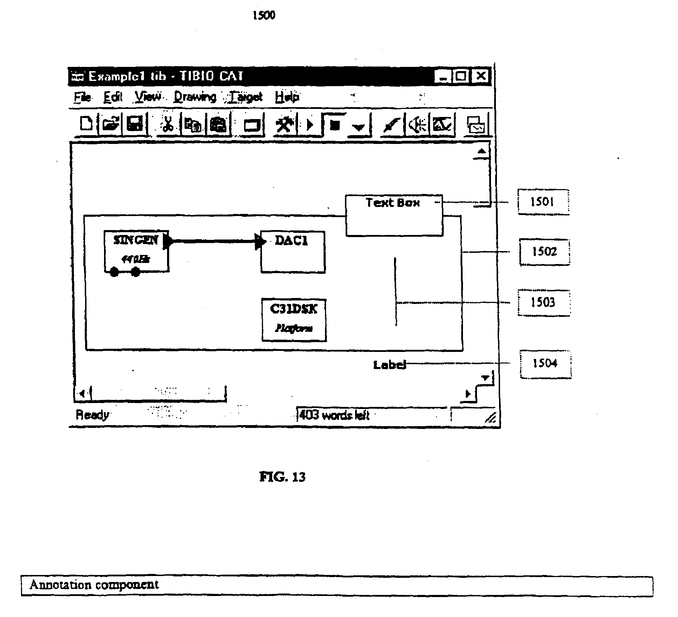

For clarity, a tibio drawing on the main computer display may need to be annotated with textboxes, dotted lines, labels, etc. These are all visual annotation tibio components that contribute no software code. However a dotted box around a group of tibio components may represent a specific group property (e.g. a specific task with properties like priority). In this instance, although the dotted box does not directly add any code to the project, it may denote a certain condition that requires code for satisfaction. Fig. 13 provides a simple tibio drawing featuring several annotation components. The textbox 1501 enables the user to add explanatory text to a tibio drawing. Textboxes are resizable, and both the fill color and the line color can be user selected. The rectangle 1502 can be used to denote items in the tibio drawing that have some common characteristic. Lines 1503 can be used to create line drawing. Text labels 1504 can also be added to provide clarity. These are just a few of the possible annotation components; others include circles, block arrows, callouts, dotted lines, and bitmapped icons. Because annotation components represent the special case of being totally passive in every way, they do not have to be stored in the same file format as other tibio components. Also they may be accessed from a convenient toolbar rather than from the tibio component gallery.

Intrinsic components are those tibio components that are available from the graphical solutions development system. These are only available while the GSDS is running. These are very handy for debugging purposes. Intrinsic components always run on the main computer system 100. They do no belong to a project and they do not contribute code to a project.

User-defined components are representatives of another type of tibio component. These are " tibio component shells" that have little or no inherent code. User-defined components provide editing capabilities (like text editing) so that software code (e.g. C source code) can be entered directly by the user, pins can be added, and properties can be defined. These tibio components are similar in every way to other GSDS components, but they permit a user to completely define their functionality (via user-entered code rather than graphical components). After the user finishes writing and debugging the code in a user-defined component, the user-defined component will be graphically represented in a tibio drawing as a block similar to any other block.

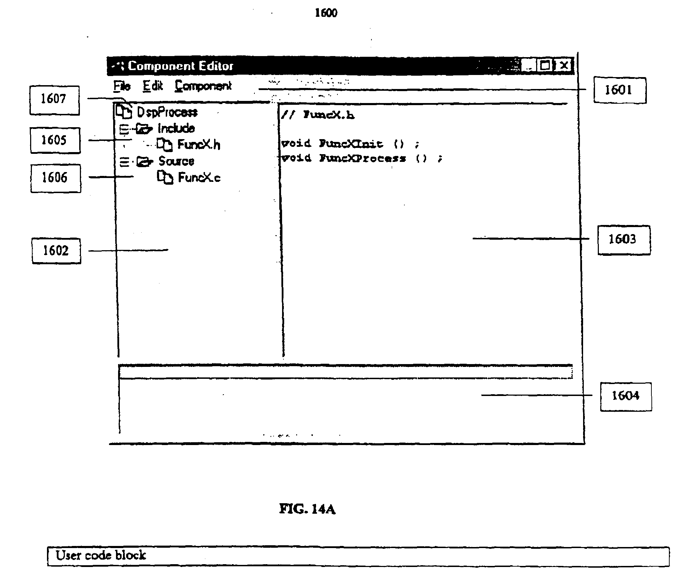

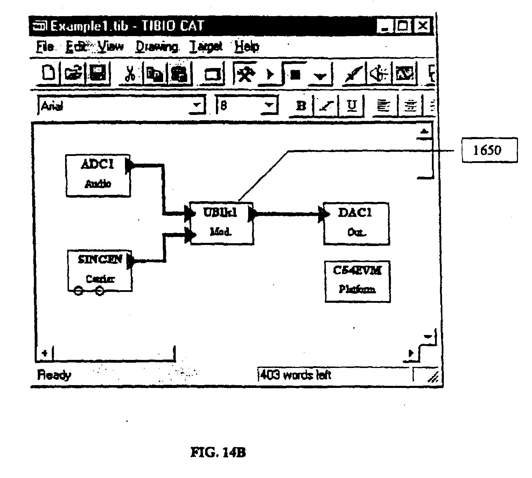

One possible user interface 1600 for the User-defined component is given in Fig. 14A. This user interface 1600 is comprised of a menubar 1601, a treeview 1602 of project folders, an edit window 1603, and a status window 1604. Because the user has configured this user-defined component to execute in the "DspProcess" project, the treeview window 1602 is currently displaying the contents of the "DspProcess" project folder 1607. Code files for this particular tibio component instance are created in the appropriate project folders. The header file is created in the "Include" folder 1605, and the C source file is created in the "Source" folder 1606. As the full tibio drawing is composed, by adding additional tibio components, additional header and source code files will be copied into these same project folders.

The edit window 1603 provides a text-editing capability (including text entry) that permits the user to write any source code needed to implement the desired function. In some implementations the user interface 1600 may employ an external editor of choice.

The status window 1604 displays helpful status information during compile and debugging operations.

Fig. 14B shows a GSDS drawing of a simple "program" that includes a user defined component 1650. This block has an instance name of "Ublkl" has been employed to realize a proprietary modulation algorithm.

Note that the user-defined code block may also be used to create user-defined algorithms for a programmable logic device, like the example in Fig.12. In such a case, the "code" might be written in a different language, and also might be compiled with a special "PLD" compiler.

Tibio components may also be used to represent the combined functionality of an aggregate composed of both hardware and software. An example might be a modem component.

### E. Property Dialogs

After the user creates a tibio drawing, but before it runs for the first time, the user usually needs to configure the property settings for each tibio component on the tibio drawing. As seen in Fig. 8C, each tibio component has a number of property settings that are provided to specifically define how the tibio component should operate.

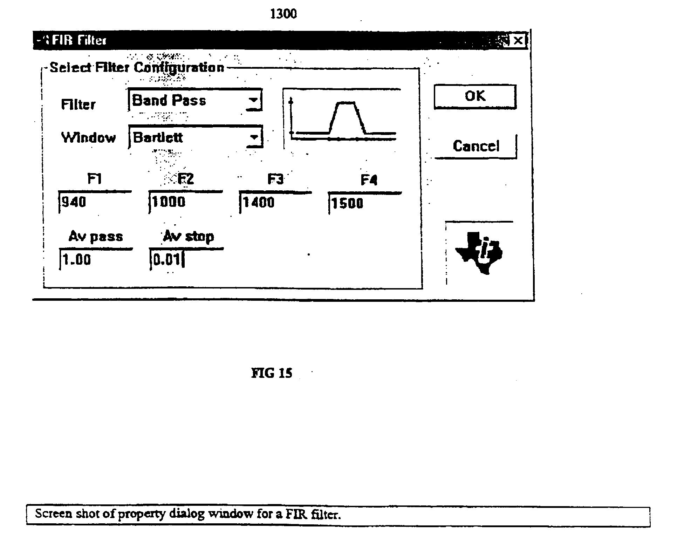

User access to property settings may be presented to the user in several different ways including list-boxes (very similar to Fig. 8C), icon-based graphical user interfaces, dedicated property dialog windows, and via "wizards" that prompt the user for performance-related information and then process the user inputs to determine actual property settings. A typical property dialog for a finite-impulse response filter (i.e. FIR filter) is given in Fig. 15. Note that this property dialog window is composed of drop-down lists, labels, edit boxes, and buttons. There is also a graphical icon to generically portray the filter characteristic. From the user-supplied information (entered in this window) several different activities can be completed automatically: 1) the number of filter sections can be computed, 2) the coefficients for the filter can be computed, 3) the appropriate code modules can be selected, 4) the code can be modified by insertion of the proper coefficient values, etc. This example clearly exemplifies one of the major benefits of the graphical solutions development system and the use of intelligent tibio components: The user is able to access optimized functionality of a FIR filter without having to 1) understand how a FIR filter works, 2) write any code, 3) determine the number of filter sections needed to achieve desired performance, or 4) calculate the necessary filter coefficients.

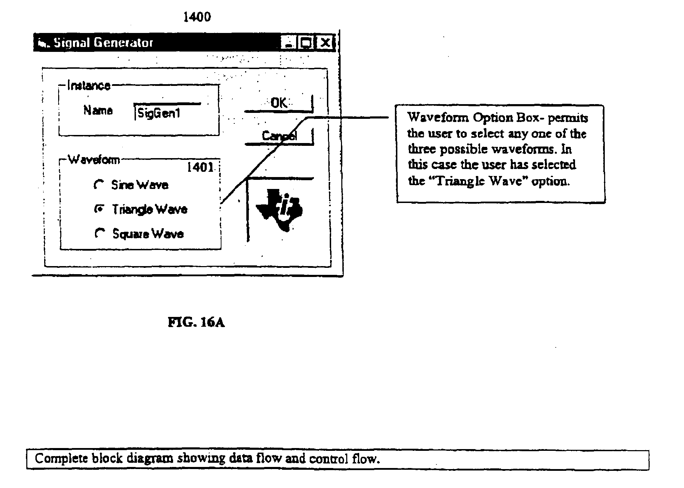

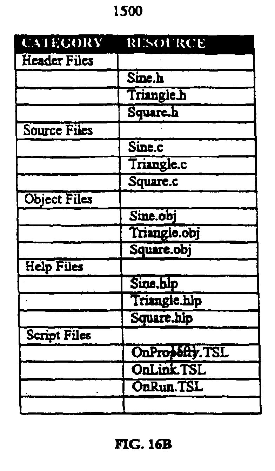

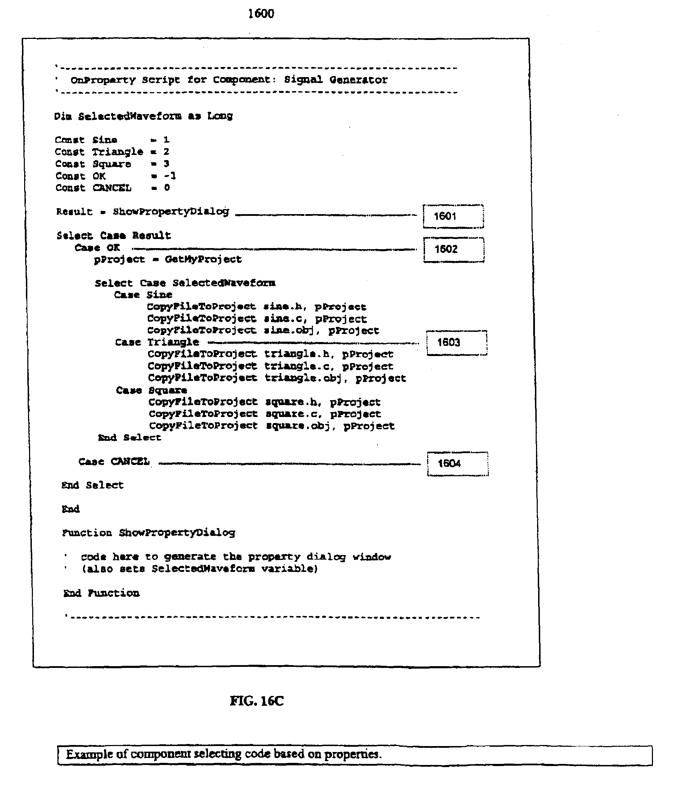

Tibio component property values, set by the user, are frequently used to determine which software code modules should be contributed to a solutions project. Figures 16A, 16B, and 16C provides a simplified example of how a tibio component may contribute different code modules to a solutions project depending on its property settings. As seen in Fig. 16A, a property dialog for a waveform-generator tibio component may offer the user a property dialog where the user can select the desired output waveform. In this example the waveform option-box indicates that the user has selected the "Triangle" waveform. Fig. 16B gives a table showing some of the resources that are encapsulated in the waveform generator tibio component. The person who created this tibio component knew that if a user wished to achieve the "Triangle" waveform, that this tibio component should copy the "triangle files" (triangle.h, triangle.c, and triangle.obj) into the project. To accomplish this the person who created the tibio component would include an "OnProperty" script similar to the one shown in Fig. 16C. The OnProperty script permits the tibio component creator to deliver a measure of his "integration knowledge", valuable insight about how the tibio component can be integrated into a project to implement a useful solution.

The OnProperty script implements five essential functions: 1) Whenever the OnProperty script runs, it generates the dialog window that is shown in Fig. 16A. 2) When the OnProperty dialog window closes, determine if it was closed with an "OK" (button click) result or with a "CANCEL" (button click) result. 3) If the dialog window was terminated via the OK button, then determine the user-selected waveform. 4) Based on which waveform was selected, copy appropriate software modules to the project. 5) If the dialog was closed via the CANCEL button, then do nothing.

All of the logical flow of the OnProperty script represents "intelligence" that the tibio component author embeds in the tibio component when it is created. If two different experts decide to separately publish a tibio component offering the same functionality, the expert who better understands how the tibio component can be used and how the code may need to be modified (or "tweaked") for various operating situations will enjoy a competitive advantage.

F. Deriving the Software Code for a Project from a Tibio Drawing Before any solutions project can be "built" (e.g. compiled, etc.) and "run" there are several activities that must be completed: 1) all necessary source-code modules must be deposited into appropriate file folders, 2) all necessary "include" files must be copied into appropriate file folders, 3) all header files must be copied to appropriate file folders, etc. In the case of a GSDS project there are additional complexities. First a "main" source file (e.g. main.c) must be generated. While the code modules for each tibio component can be composed when the tibio component is created, the "main" source file, which represents how the various tibio components are interconnected, cannot be written (or generated) until a tibio drawing has been completed. One of the main goals of the GSDS is to assist new users in accessing powerful technology that has heretofore been the private domain of a relatively small group of experts. For this reason, the GSDS implements a strategy that can "inspect" a tibio drawing and automatically generate the appropriate "main" source file. The next few paragraphs explain how the GSDS extracts and processes information from a tibio drawing to generate a complete project that matches the user's expectations.

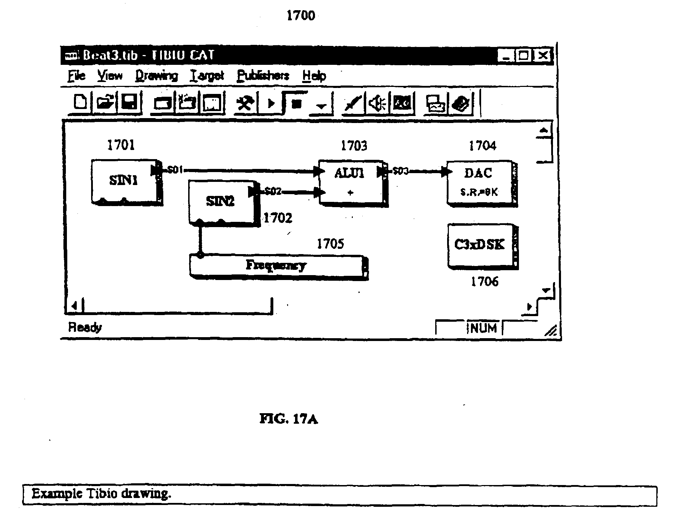

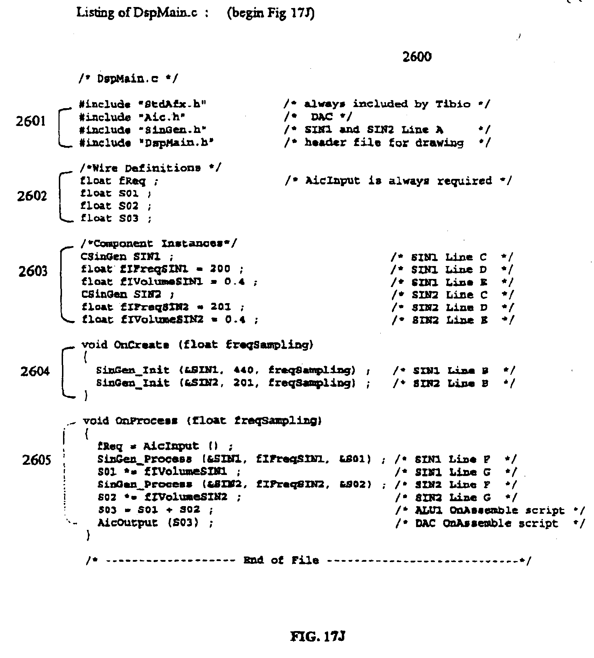

The screen shot of Fig. 17A shows a functionally complete GSDS drawing as it appears in the GSDS development environment. This tibio drawing shows two instances of a sine-wave component 1701,1702. These blocks have instance names "SIN1" and "SIN2" respectively. The outputs of the two sine-wave blocks are connected to an arithmetic-logic unit (ALU) block 1703. The instance name (or blockname) of this block is "ALU1". The ALU block generates an output signal that is mathematically computed from the two input signals based on an "operation" property that is set by the user. The operation property is confined to one of four possible math operations: add, subtract, multiply, or divide. In this particular tibio drawing, the ALU block 1703 is configured for addition, and a label is provided to indicate which operation is currently selected. Here the label shows a plus sign (+) to indicate addition. The output signal from the ALU 1703 is connected to a digital-to-analog converter (DAC) block 1704. A slider control 1705 is connected to the "Frequency-Input-Event" pin on sine-wave generator 1702. (Note: To avoid clutter, there are no labels on any of the pins. However, anytime that the screen cursor is positioned near a pin on any block, a label (often referred to as a "tool-tip") appears to provide the pin-name and datatype.) When this tibio drawing is "run", the slider control 1705 permits the user to vary the frequency of the SIN2 sine-wave generator 1702. The platform block 1706 is labeled "C3xDSK". The platform block provides information about the actual hardware, which in this case is a Texas Instruments TMS320C3x DSP Starter Kit.

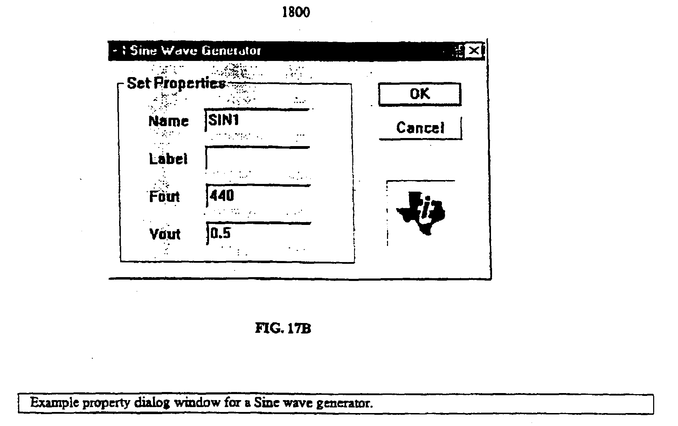

After constructing this tibio drawing, the user has an opportunity to set the properties of each block on the tibio drawing. User access to property settings is via a property dialog window. There are several ways to invoke a block's dialog window, including "double-clicking" on a block with the pointing device. The property dialog window for the sine-wave block is shown in Fig. 17B. The "Name" field is an editbox where the user can enter the desired instance name. In any given project, all instance names must be unique. If two or more blocks are given the same name, then the tibio framework will detect a name "clash" and warn the user. The GSDS provides a user selectable feature referred to as "auto-naming" that will automatically generate unique names as each block is added to a tibio drawing. The user has the option to over-ride the automatically assigned name. The "Label" field is an optional property that will add a text label to a tibio component. (In the ALU block 1703, the label field is used to exhibit the arithmetic operator.) The "Fout" field sets the default sine-wave frequency. At runtime, the sine-wave block will generate sinusoidal data at the default frequency until it receives a frequency-change event at the "Frequency-Input-Event" pin. The "Vout" field sets the default value of the peak amplitude of the computed sinusoidal data. Because this tibio drawing 1700 uses two sine-wave generators, the values for each on these blocks must be set individually.

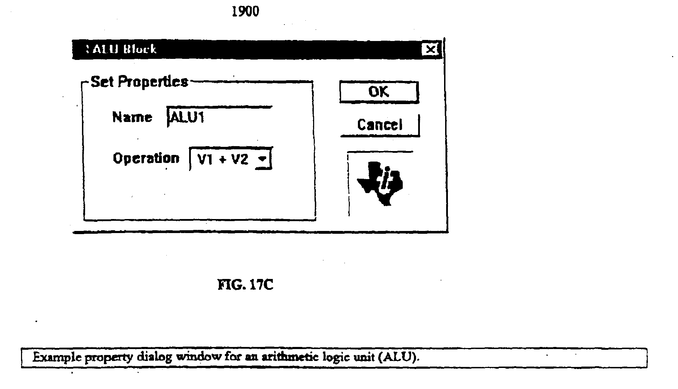

The property dialog window for the ALU block is given in Fig. 17C. Here the desired "Operation" is user-selectable via a "drop-down" list control.

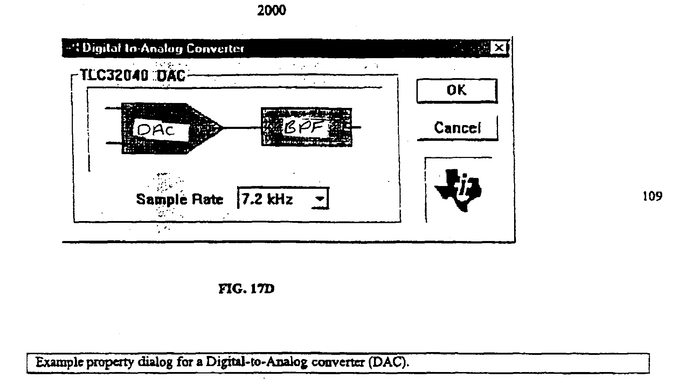

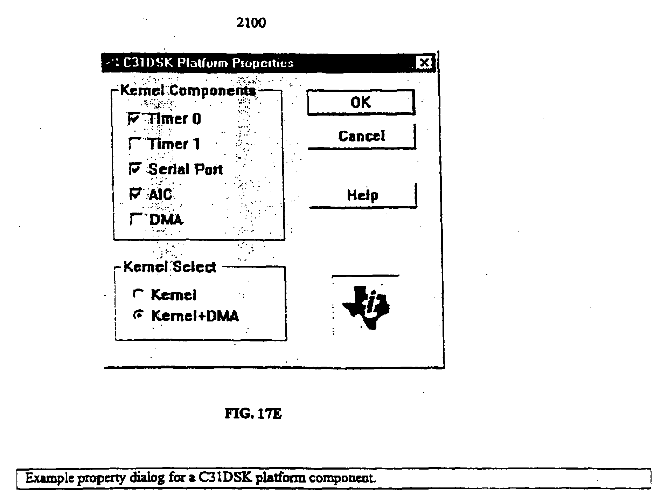

Similarly, a property dialog window for the digital-to-analog converter is provided in Fig. 17D. For this particular DAC implementation, the data sampling rate is user selectable from this dialog window. In many cases, the data sampling rate will be defined using alternate methods.

The platform block 1706 provides the property dialog window shown in Fig. 17E. This particular platform includes a modular kernel, where individual kernel-modules are user selected as shown in the figure. The ability to custom tailor the operating kernel permits the user to minimize memory usage.

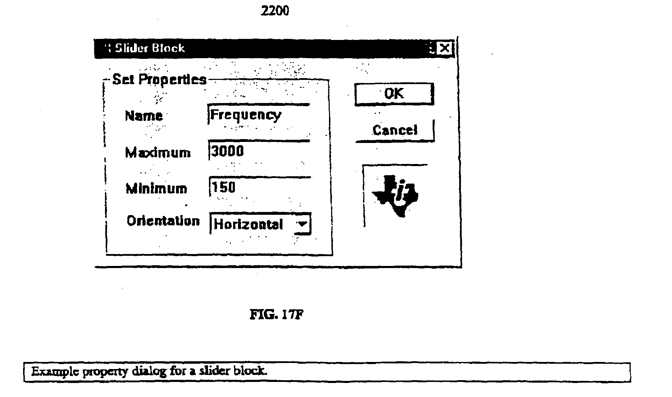

The property dialog window shown in Fig. 17F is for the slider control 1705. Movement of the slider thumb from one extreme to the other (i.e. far left to far right) will produce events with values varying from a minimum of 150 to a maximum of 3000. The actual event values that are generated will be directly proportional to the position of the thumb. The slider control only generates output events when the slider thumb is moved. The "Orientation" field configured the visual orientation of the slider block icon on the display screen. The only two options are horizontal and vertical.

Inside of each tibio component there are many files and/or resources. Among these resources are script files that are used by the GSDS to permit each tibio component to react to the GSDS and its environment in its own unique way. In the example tibio drawing 1700, most of the tibio components include three different scripts: OnProperty, OnDeposit, and OnAssemble. Each of these scripts is executed by the GSDS at different times in the design process. The OnProperty script is executed whenever the user requests the property dialog window. Whenever the "build" process is initiated, two activities must be accomplished. First, the wire interconnections must be analyzed to determine how the data should pass from one block to the next, and how events should be passed from one block to the next. Second, the source code for the "main" module must be generated. During the next phase of the build process, the block list is again traversed and the OnDeposit scripts for each block are executed. OnDeposit scripts are employed to copy files and resources from inside the block to the appropriate project folders.

All of the information shown on the tibio drawing 1700 is maintained by the GSDS in a comprehensive tibio drawing object array. The script language, which is similar to Microsoft's Visual Basic for Applications (VBA), has been extended with a powerful set of APIs (application-programmer interfaces) that permit scripts to both query and modify objects in the tibio drawing object array. The APIs comprise a set of basic functions that can count the number of elements in a collection, can obtain object names based or pointers (and vice versa), can read or modify property settings, and other similar functions. These APIs in tibio component-borne scripts provide programming power.

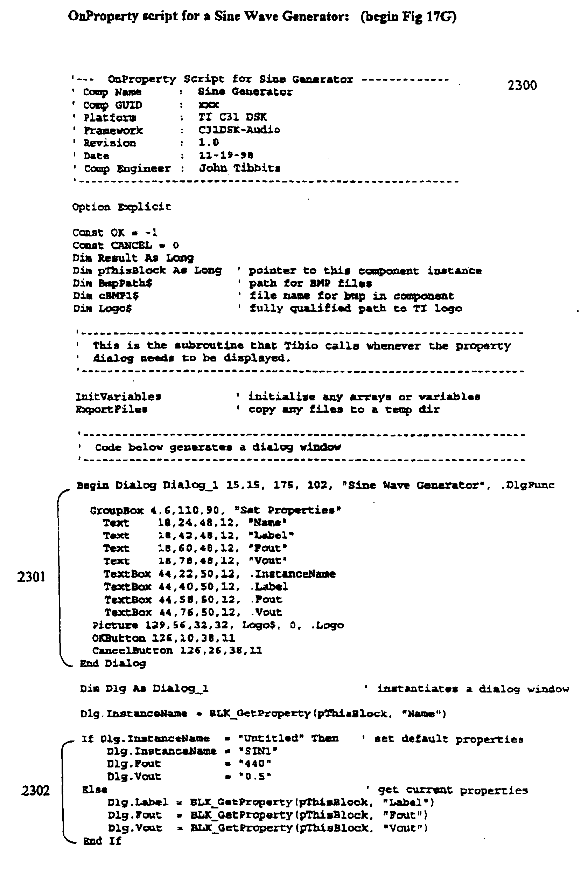

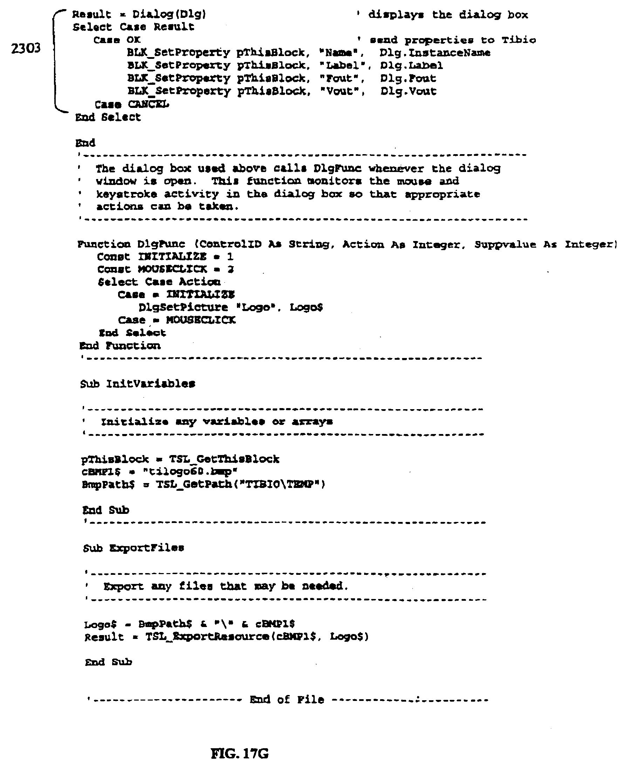

The OnProperty script for the sine-wave component is given in Fig.17G. This script had three sections that are of note. The first section 2301 is the code that defines exactly what the dialog window will look like. This specifies the size and layout of the dialog window, all labels, all edit-boxes, and all pictures and buttons.

The second section 2302 of interest retrieves the previously set property values for the block and updates the dialog controls in the property dialog window. The first time that the property dialog window is presented, the user will have had no opportunity to make any property modifications. In this case, this section of code detects that no properties have been set, and default values for all properties are automatically generated.

The third section of interest 2303 determines what happens when the dialog window is dismissed. If it is closed via the "OK" button, then the block properties, which are maintained by the GSDS, are updated with the values that have been entered in the property window. If the property window is closed via the "Cancel" button, then the script makes no changes to the block's current property values.

Every block in the tibio drawing 1700 has a similar OnProperty script.

The OnAssemble script 2500 for the sine-wave generator is shown in Fig. 17I. Code 2501 is retrieving pointers to the current block, current project, and current workspace. Code 2502 traverses the object array to determine the name of the wire attached to the sine-wave generator's output pin. The wire name is used as a parameter in the "main" code file. Code 2503 queries to get the default property values for both signal frequency and signal amplitude. These will be used to initialize variables in the "main" source file. Code 2504 determines the pin names for the event pins and concatenates the pin names with the blockname to generate unique variable names. Code 2505 builds declaration strings that will be pasted into the declaration section of the "main" source file. Similarly code 2506 builds strings that, when pasted into the "main" source file will be the actual function calls to the two functions that, by tibio framework convention, every tibio component must export. These are an INIT function to perform initialization, and a PROCESS function that is called at the sampling rate. The PROCESS function provides all mathematical or logical operations that the block is to apply to each data sample.

A similar sequence of OnAssemble operations is repeated for each block in a project. This represents a rather diverse data gathering operation. It would be very time consuming and inefficient to iterate through all the blocks to get the include-file information, then iterate through all of them again to get the wire variable names, then iterate again for block declarations, etc. A further difficulty would occur when a tibio component is instantiated more than once in a tibio drawing (like two sine-wave generators in tibio drawing 1700). This would produce duplicate include statements, multiple copies of resources, as well as duplicate object code. The GSDS employs a novel concept called a fragment map. A fragment map is a temporary collection of data fragments. Each data fragment can be a line of code that needs to be included in the "main" source file. Fragments are organized into appropriate groups such as "Include", "Init", "Declare", etc. The entire fragment map can be generated in a single traversal of the block list. After the fragment map is generated, it is a rather simple matter to copy the fragments into the "main" source file in the proper order. Duplicates are easily filtered out during this main-file synthesis operation. Code section 2507 is an example of several code fragments being added to the fragment map.

Again, nearly every block will have a similar OnAssemble script.

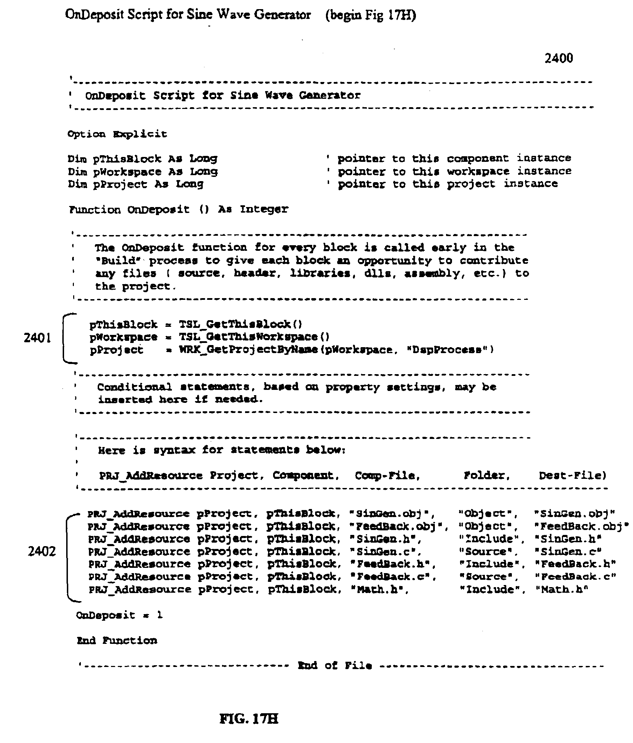

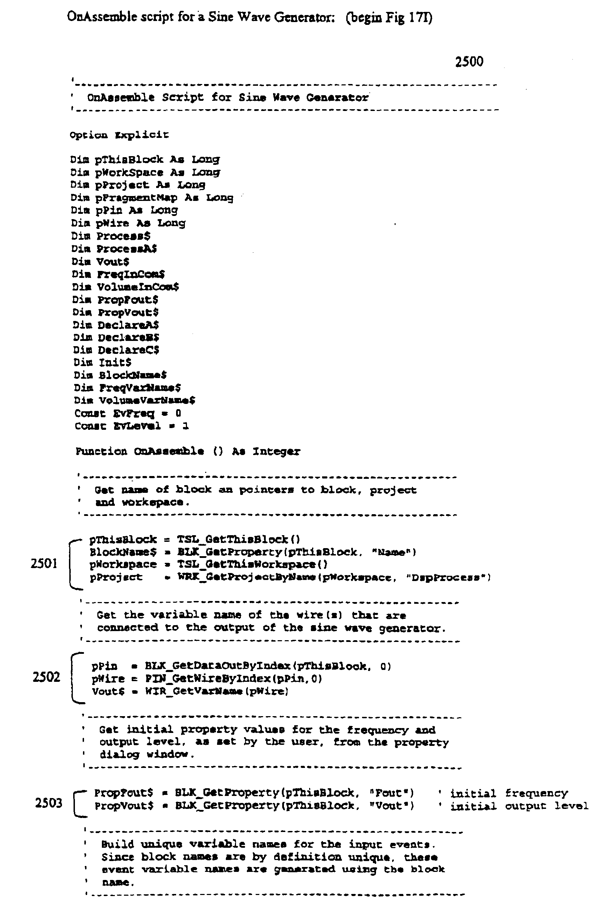

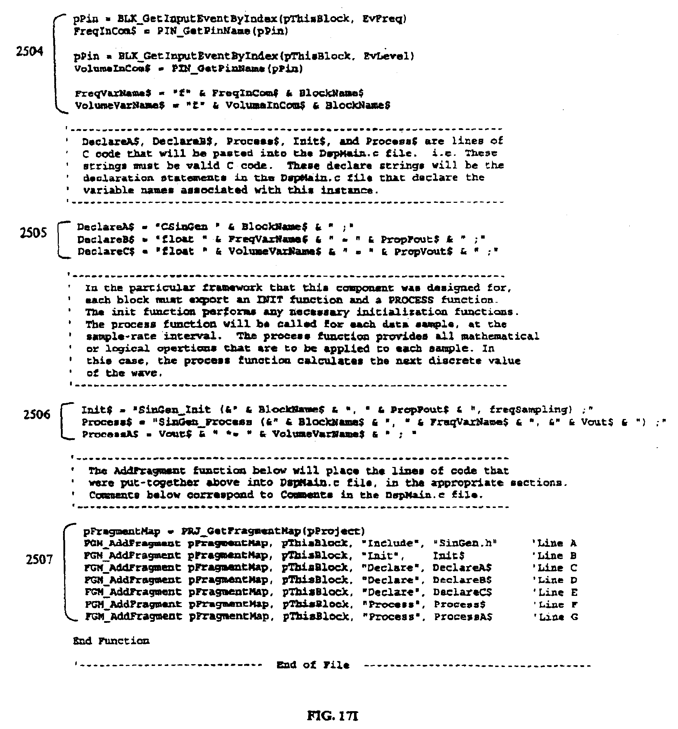

Fig. 17H provides the OnDeposit script 2400 for the sine-wave generator. Code section 2401 queries to get pointers to the current block, the current project, and the current workspace. Code section 2402 illustrates how resources within the block are copied into appropriate project folders.

After all of the scripts have been run and the fragment map is completed, the GSDS copies and filters the fragments into the main source file. Fig. 17J provides a listing of the main source file 2600. In this instance, the main source file is named "DspMain.c". With the exception of the comments, this file was completely synthesized automatically by the GSDS. Subsequent GSDS operations would include compiling and linking.

### G. tibio component Gallery

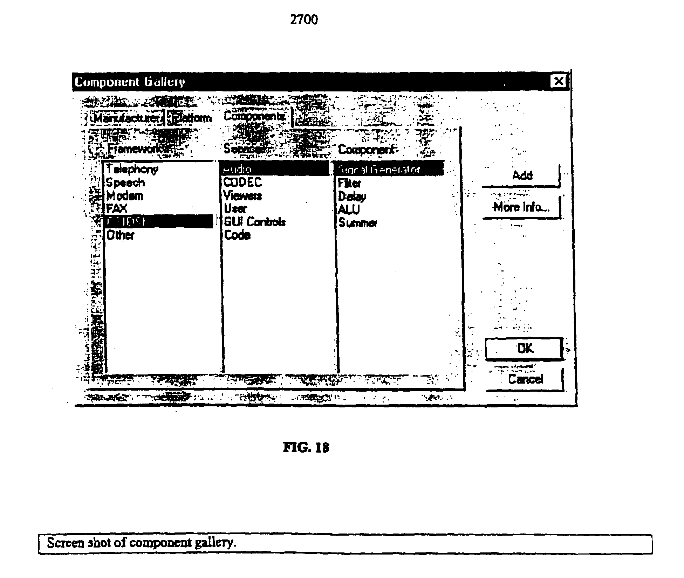

The development system features a tibio component gallery that provides a list of all tibio components that are available to the user. These tibio components may reside on the main computer system 100, or they may reside on remote systems (accessed via a local-area network or the Internet). The tibio component gallery may present a combined listing of both local and remote tibio components. The tibio component gallery offers "filtering" options so that only tibio components with certain features are presented in the gallery. (For example, only show tibio components that are compatible with the Texas Instruments TMS320C5410 digital signal processor.) Filtering is a convenience that reduces clutter and enhances productivity. Fig. 18 presents one possible rendering of a tibio component gallery. Note that the tibio component gallery could be represented using a set of icons rather than a list of text entries. The GSDS component gallery can automatically adapt to the tibio drawing. One example is that once a platform component is added to a tibio drawing, the tibio component gallery can automatically filter the available tibio components, and then show only the tibio components that are compatible with the particular hardware on which they will be executed. The user can configure tibio component gallery options to determine which filtering operations are desired.

### H. Tibio frameworks

Digital signal processing algorithms and digital signal processors are very complex. There is a limited cadre of experts who are able to produce effective digital signal processing solutions in a timely manner. The "journey" that a novice programmer must endure to reach even a minimum level of achievement and satisfaction is long, slow, and tedious. The graphical solutions development system attempts to minimize the difficulty that a digital signal-processing neophyte experiences. The ideal, but impractical, solution would be to have a digital signal processing expert sitting right beside the user to warn and explain things at each stumbling point. The development system provides an alternative, referred to here as a tibio framework. In practical terms, the concept of a tibio framework is actually better than a resident expert in many ways. It is not subject to human error, it is tireless, and it is not intimidating. The tibio framework is comprised of a set of rules and a rule engine that is implemented in software in the graphical solutions development system application. The tibio framework rules are composed by a team of experts who understand the many subtle issues, the tradeoffs, and the quirks involved in implementing digital signal processing solutions. Each time that the user changes anything on the screen (e.g. adds a tibio component, moves a wire, changes a property) the rule engine executes the appropriate rules and provides user feedback. A simple example of a rule violation is where a wire is drawn from a pin that sends out 16-bit data to a pin that expects 8-bit data coming in. Depending on user preferences, main computer system speed, and other factors, the rule engine may be programmed to run after every tibio drawing change, or only after specific events.

The data that comprise the rules and the rule engine of a tibio framework may be physically distinct, or they may be "hard-coded" into an integrated implementation. A hard-coded implementation makes it more difficult to change rules, but this disadvantage is offset by enhanced execution speed.

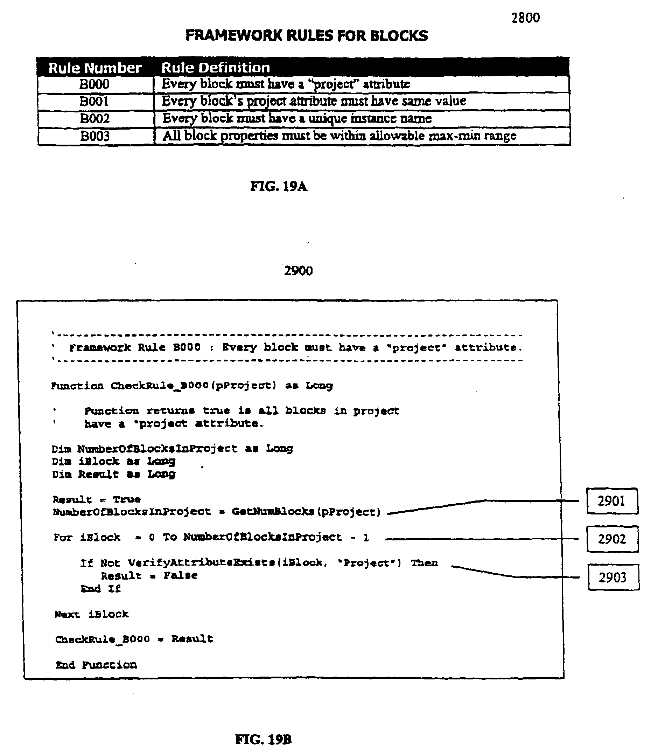

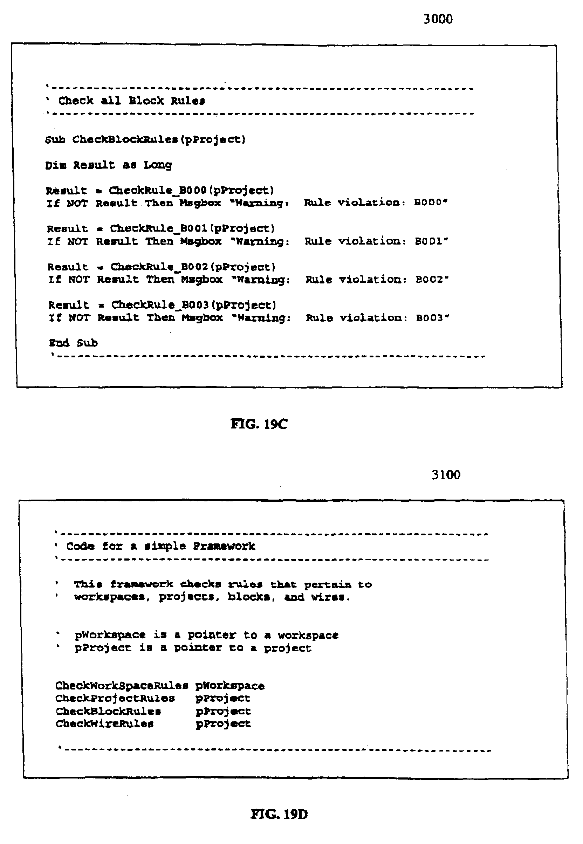

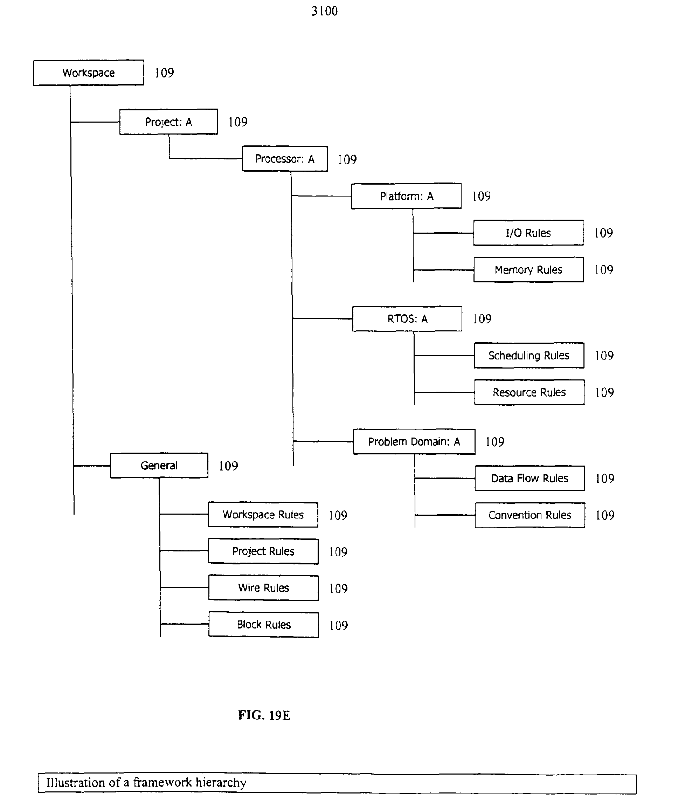

A complete tibio framework example is provided in Fig. 19D. This tibio framework script code sequentially calls subroutines that verify rules for the workspace, the project, the blocks, and the wires. This simple example is somewhat deceptive. If a more robust tibio framework were invoked to "examine" a non-trivial tibio drawing, the verification process might involve hundreds or thousands of rule-checks. Without the advantage of an automatic rule-checker, it might take an expert programmer hours or days to locate just one rule violation. Thus the tibio framework provides a very potent capability.

Even though a tibio framework may be implemented using "hard-coded" routines, the tibio framework may be partitioned into separate sets of rules. Each set of rules may focus on rules that pertain to one aspect of a tibio drawing, for example: blocks. Further, it is possible that the code that checks a given set of rules be collected into separate tibio framework modules. This leads to the concept of a tibio framework "executive" routine that can call individual tibio framework modules as needed. As shown in Fig. 19E, tibio framework modules can be arranged in a hierarchy. Various modules in the hierarchy may be replaced depending on specific tibio drawing conditions. Consider a tibio drawing where one portion of the tibio drawing pertains to motor control, and another section of the same tibio drawing pertains to speech recognition. (These differences in focus are sometimes referred to as different "problem domains".) In this example it is quite likely that the set of rules for wires in the motor control area will be different from the set of wire rules that apply to the speech recognition "circuitry". A tibio framework executive is able to call the appropriate wiring-rule module depending on which section of the tibio drawing is being analyzed. The exact arrangement of the tibio framework modules in the tibio framework hierarchy may differ substantially from the example given in Fig. 19E.

In some instances a block may recommend a specific tibio framework to govern its operation. In other instances it may contribute its own set of rules that guarantee correct results.

Specialized (custom) versions of the GSDS may be designed with the tibio framework "hardcoded" into the GSDS code. In this case, the tibio framework would be fixed and immutable. In other case, the tibio framework may be a distinct module that can be replaced by the user. In yet another case, the tibio framework may be implemented as tibio components that appear in a GSDS drawing.

### I. tibio component Publisher

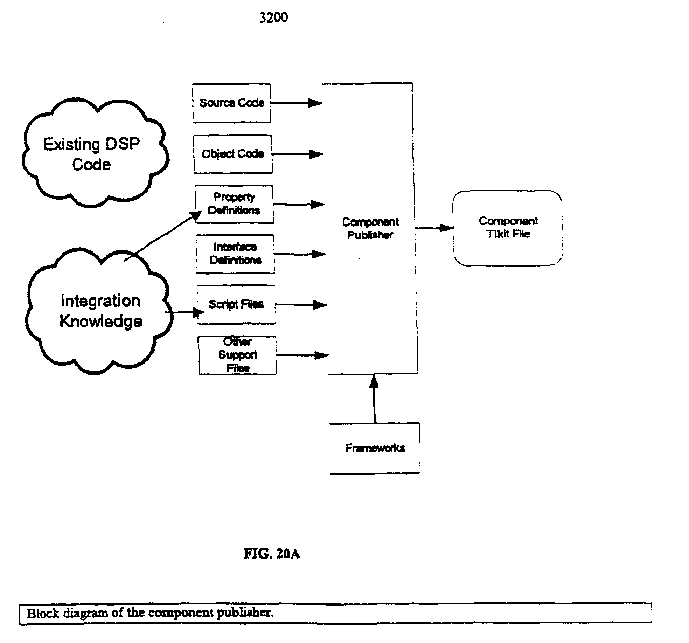

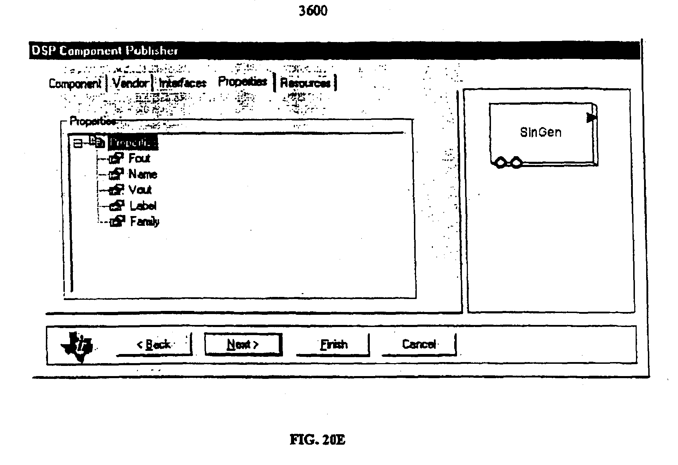

The graphical solutions development system 500 is based on the concept of the composition of several pre-engineered tibio components to provide a higher-level solution. (This is analogous to bringing many mechanical components (engine, wheels, transmission, etc.) together to build an automobile.) The commercial success of the graphical solutions development system 500 is predicated on widespread availability of tibio components. The graphical solutions development system provides a tibio component publisher to facilitate the creation of tibio components that are fully compatible with other tibio components and the graphical solutions development system. ***Fig.20A heuristically shows the overall structure.

The tibio component publisher may be implemented using a sequential user dialog construction (this is frequently referred to as a wizard), or it may be implemented in other ways such as embedding " tibio component-publishing" capability directly into a user-defined component.

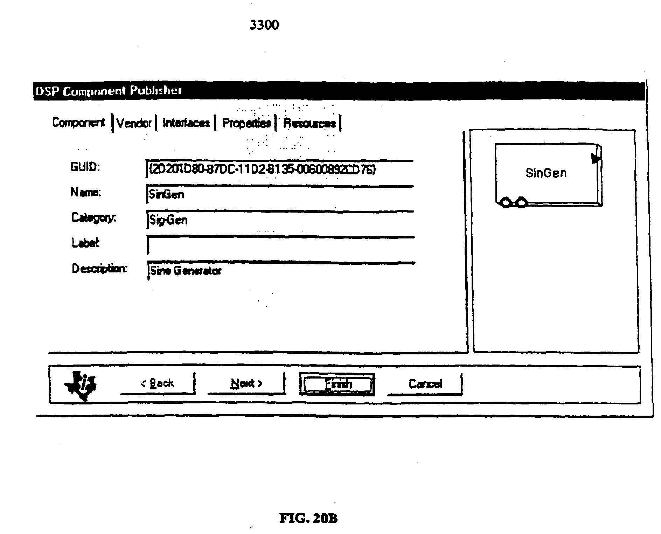

One example of a tibio component publisher, employing a wizard construct, is shown in Figs. 20B-20F. In this example, the wizard is configured as a tabbed dialog where the user can quickly and directly access the information on any tab. The first tab, Fig. 20B, requests the tibio component author to fill in general information like the name, a description, etc. The "GUID" field is for a random number associated with this specific tibio component. The term "GUID" is actually an abbreviation for Global Universal Identifier. (GUID technology is an established software standard.) In this case, the tibio component publisher automatically generates the GUID which is a 128-bit identifier typically broken into five fields by hyphens and expressed in hexadecimal. The tibio component publisher includes a symbol pane that provides a graphical view of the symbol that will appear in a GSDS drawing when an instance of this block is added. As the tibio component is defined and refined, using subsequent tabs of the tibio component publisher, this symbol will be automatically updated to represent the new tibio component accurately.

The tibio component publisher may include graphical editing capabilities that permit the user to directly modify the symbol. This might include changing size, changing colors, adding text fields, moving pin locations, etc. Buttons at the bottom of the tibio component publisher permit the user to advance to the next tab, to retreat to previous tabs, or to cancel the publishing operation. The "Finish" button is enabled when all of the tabs are satisfactorily completed. The finish operation is chiefly concerned with formatting the data properly and storing it in a file.

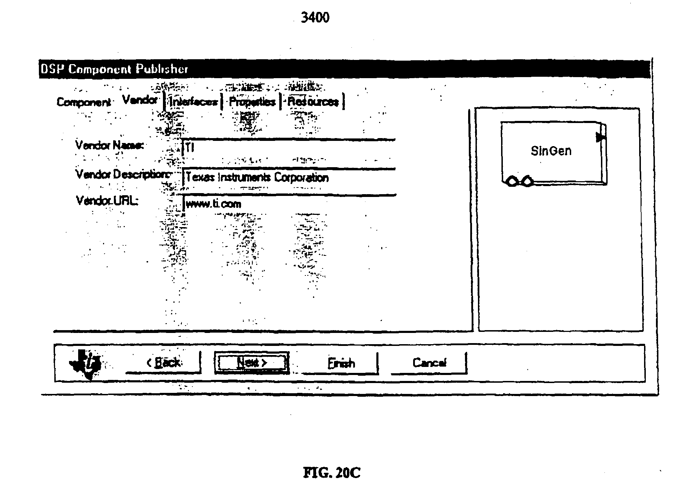

The vendor tab, Fig. 20C, collects pertinent vendor information. Other information could include addresses, technical support information, phone numbers, etc.

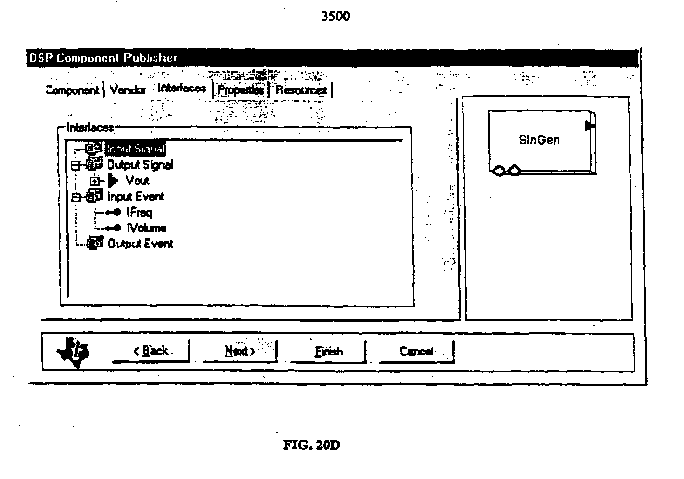

The interfaces tab, Fig. 20D, permits the tibio component author to add pins to the tibio component. For clarity, this tab provides a "treeview" of the pins. The tibio component creator may add any number of pins into each of the four possible interface categories: Data Input, Data Output, Event Input, and Event Output. (The treeview shown in this example refers to the four pin categories using the labels "Input Signal", "Output Signal", "Input Event", and "Output Event" respectively. In Fig. 20D note that three pins have been defined: an Output Signal pin named "Vout" and two Input Event pins named "IFreq" and "IVolume".

The properties tab, Fig. 20E, allows tibio component properties to be added. Again a treeview is used to present the properties. Not shown, each property may have attributes. For example the signal frequency property, Fout, could have attributes "Fmax" and "Fmin" that could be used to limit the frequency range.

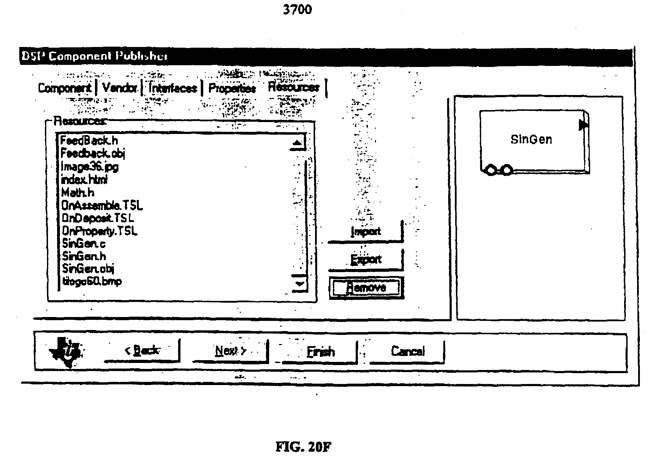

The resources tab, Fig. 20F is the dialog where the tibio component author can insert any files that need to be added to the tibio component. In this example, note that in addition to the source files that have been discussed, there is also a bitmap file (tilogo60.bmp) and three script files: OnAssemble.TSL, OnDeposit.TSL, and OnProperty.TSL.

The tibio component author may use the tibio component publisher to "edit" an existing tibio component. In this case, the tibio component publisher will "read" the tibio component file and place all of the relevant information on the appropriate tibio component publisher tabs. The author may then browse and edit the information as needed. Some tibio components may have a "locking mechanism" that prevents normal users from modifying a tibio component.

The tibio component publisher verifies that all essential information is included before it will produce a finished tibio component. One of the final steps in producing a tibio component is to create a software file and storing all relevant tibio component information in this file. The file may have a predefined, standardized format. The tibio component publisher assures that tibio component file, which is the physical collection of all the data in the tibio component, is created and formatted in accordance with any applicable tibio component standards.

The tibio component publisher may use tibio framework rules and/or the tibio framework rule engine to assist in creation of a new or existing tibio component. This verification process provides a great deal of assurance that a tibio component will operate in a given tibio framework. A tibio component may be checked for compatibility with more than one tibio framework.

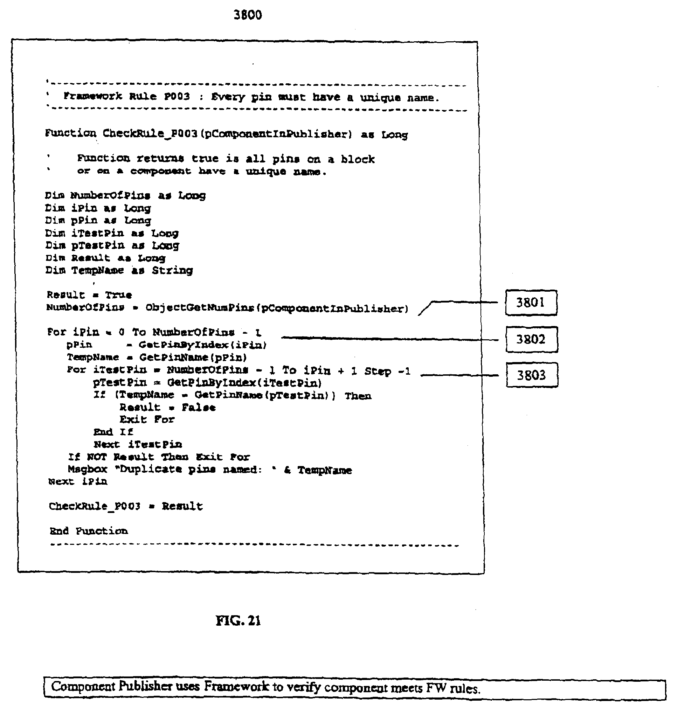

An excerpt from a tibio framework script is given in Fig. 21. This code is designed to verify that each pin on a tibio component (or block) has a unique name. A pair of For/Next loops is used to iterate through all pins so that the name for each pin can be compared to the name of every other pin. Code 3801 queries the GSDS to determine the number of tibio component pins. Code 3802 implements an outer loop that iterates all of the pins. For each pass of through the outer loop, the code of the inner loop 3803 iterates through all pins (that have not already been checked) and compares pin names to see if there are any duplicates. This example demonstrates that the expertise embedded in a tibio framework script can be leveraged each time that a new tibio component is created.

### J. Data Viewer

A typical tibio drawing is a composition of tibio components interconnected with wires. In such a tibio drawing, data and control information are processed to achieve a desired result or solution. Frequently for debugging or for verification of proper operation, it is beneficial to be able to inspect the operation of a tibio drawing at various points on the tibio drawing. The graphical solutions development system implements the concept of probes and data viewers to permit the user to visually display a representation of the data on any wire or pin.

The term "Data viewers" refers to a set of software modules where individual viewer modules can be added and older viewers can be replaced with newer versions. Adding or replacing viewers can be done at any time after the GSDS is installed. Also, certain tibio components may contain custom data viewers. In this case, the tibio component, when it is instantiated in a tibio drawing, may automatically add the viewer to the GSDS system.

Although conceptually it is easy to conceive of a data viewer providing a graphical representation of data, similar to an oscilloscope, a data viewer may provide substantially different capabilities as well. For example a data viewer may provide an interactive window where the user can modify or simulate various operating conditions. This means that a data viewer, in addition to being able to display the response at various points in a GSDS drawing, may also be able to provide stimulus to various points in a tibio drawing.

Fig, 22A provides a screen shot 3900 of the GSDS showing a representative tibio drawing for a dual-tone multi-frequency (DTMF) signal generator. In this tibio drawing, two probes have been "inserted". An oscilloscope probe 3902 is attached to a wire. This connotes that data from this wire is available for any suitable viewer. A second probe 3906 has also been attached to a wire. This probe, denoted by the loudspeaker icon, forwards this data stream to an audio output device (e.g. a speaker). Probes provide a very convenient high-level debugging tool. Probes are invoked from appropriate toolbar buttons 3905 or from menu selections.

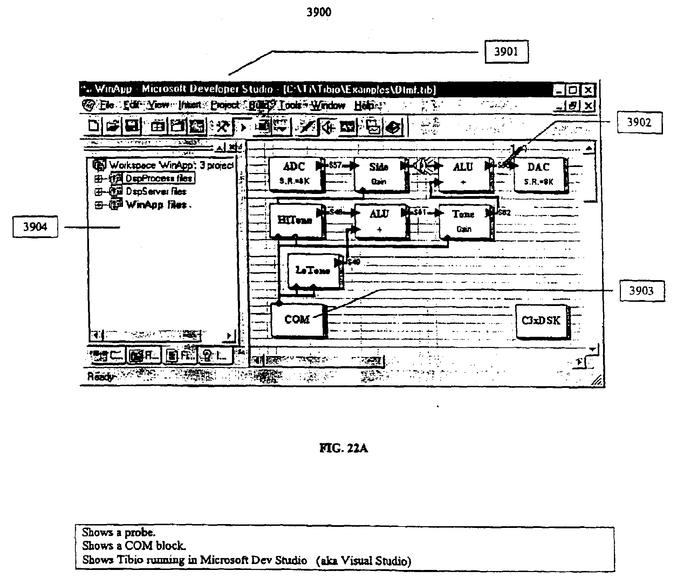

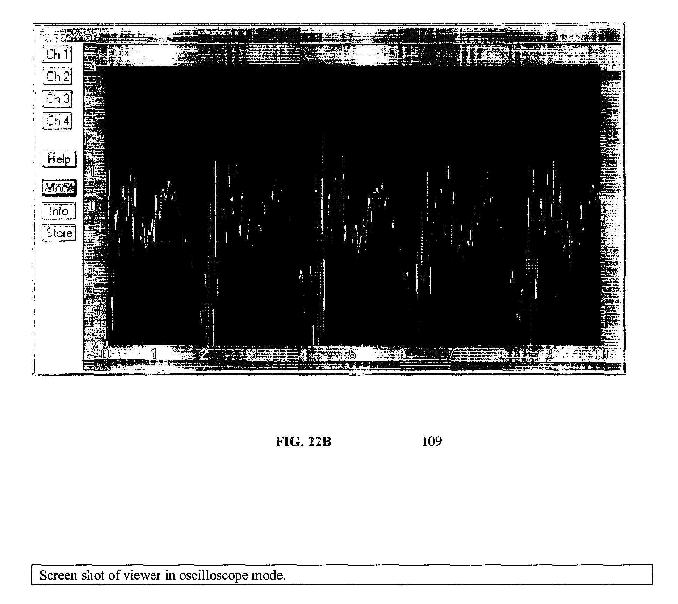

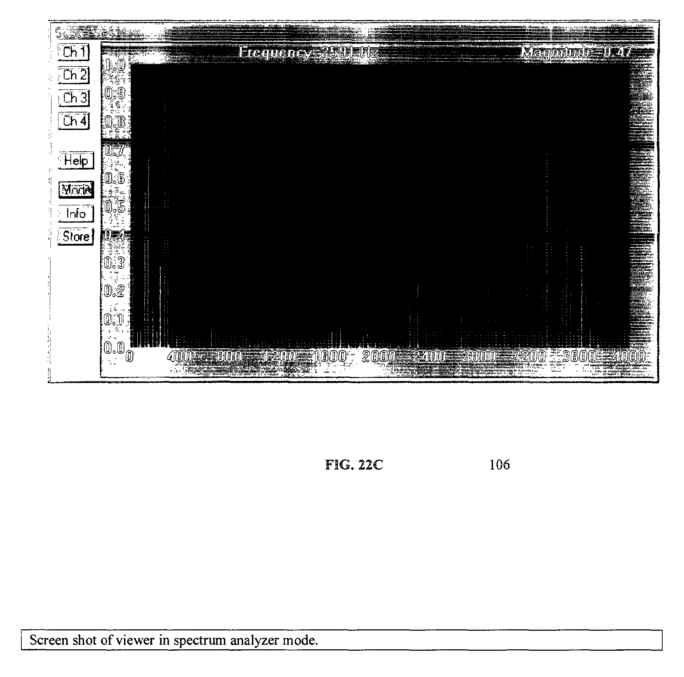

Figures 22B, 22C show typical data viewer screens. In this case, Fig 22A provides a time-domain plot fo the signal on the wire being probed, whereas Fig,22B provides a spectral plot of the signal.

### K. Using the Graphical Solutions Development System

In general steps in building a project include sequentially adding blocks of tibio components of various types to a tibio drawing and connecting pins with wires. For example, a tibio component X from a remote location via the Internet may have design help files, the change in parameters of tibio component Y automatically changes parameters in tibio component Z, and a tibio framework may impose constraints on tibio component W. Recall Fig.8B illustrates basic connections and one block influencing parameters of another block.

### Further preferred embodiments

The preceding has described how the GSDS leverages the intelligence of expert programmers and delivers powerful capabilities to both advanced and novice programmers. Many GSDS concepts extend to more generic situations as indicated in the following sections.

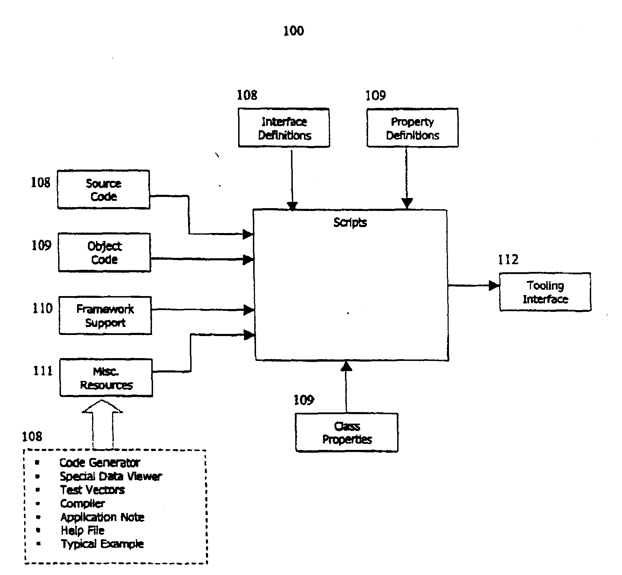

A. tibio component Packaging & tibio component File Structure The graphical solutions development software employs a standardized tibio component architecture where a tibio component may be considered as a single composite formed by the aggregation of many different resources. (In many cases, resources can be thought of as files.) These resources are stored in a special archive file that is commonly referred to as a compound file, as illustrated in Fig. 24 and referred to as a TIkit file. Resources may be functionally segregated into several different categories including code modules, configuration modules, and other miscellaneous files and resources. The graphical solutions development system includes a " tibio component resource" server that can locate and retrieve any resource in any tibio component.

### (i) Code Modules

Code modules comprise all of the run-time resources stored in a tibio component. These resources may include source code, assembly code, object code, libraries, objects, code fragments, etc. The final run-time code that ultimately gets deposited into a solutions project is usually constructed using a subset of these resources. Source code modules may be encrypted to protect the commercial interests of tibio component designers.

### (ii) Configuration Modules

This is the collection of all the script files, executables, code generators, etc. that are stored in and delivered with the tibio component. This collection may include assemblers, compilers, linkers, or other specialized build tools. These modules may provide configuration dialogs or other design assistance. Via scripting these modules can gather design information from both the user and the current tibio drawing. After gathering all pertinent information, the configuration modules construct a customized run-time file (or files) that is deposited into the appropriate solutions project(s). It is important to note that "customized run-time files" means that two instances of the same tibio component in a single tibio drawing may contribute completely different run-time code-depending on how they are used, what they are connected to, how their properties have been set, and other factors. The configuration modules are used primarily at design-time; hence these files are usually not part of the run-time code image.

### (iii) Miscellaneous Modules

These are any other resources that the tibio component creator thought might be helpful to a user. These include help files, application notes, links to web sites, utilities, graphics, etc. These modules also represent design-time resources.

### (iv) Class Properties

tibio components also contain a set of common properties referred to as "class" properties. Class properties are properties that every tibio component is expected to maintain. These properties provide a set of standardized data that includes the tibio component name, the tibio component vendor, the revision number, the revision date, tibio component description, as well as many other items. Most of these properties are set when the tibio component is created and are "read only" after the tibio component is published. Some class properties may be modified by the user.

### (v) Self-Contained File Format

All of the resources that are included in a tibio component are stored in a single compound file. If a user has a tibio component file, then there is great certainty that all necessary tibio component resources are available. This very clean approach to tibio component deployment avoids a great many pitfalls and simplifies copying a tibio component, deleting a tibio component, moving a tibio component, selling a tibio component, etc. The entire tibio component-file strategy is optimized for web-based deployment.

### (vi) Self-Installing tibio components

A tibio component can include many different resources (files). It would be cumbersome to have to unpack all these resources and move them to special directories. This would be prone to many errors during installation. Additional errors would be likely when trying to move, or delete a tibio component. To simplify this situation, the graphical solutions development environment implements a tibio component server that can fetch resources from any tibio component. With this advancement, installation of tibio components is reduced to simply coping it into the designated " tibio component" directory. This eliminates setup; this eliminates configuration. Since it is a single file, it is very convenient to move it, copy it, delete it, etc.

### (vii) Unique Naming Convention

Tibio component files employ a unique naming convention that eliminates the possibility that different tibio component designers might create different tibio components but accidentally use the same name. Different tibio components with the same name (a situation referred to as "name clashing") create confusion because a tibio drawing may be expecting code from one but actually get code from a different (i.e. rogue) tibio component. When a tibio component is published (created), the tibio component publisher creates a random name. This filename is based on a Global Universal Identifier (GUID). The use of GUID technology reduces the probability to less than once in a million years.

### B. Intelligent tibio components

The purpose of a tibio component is to encapsulate and deliver some useful functionality (e.g. demodulation, data encryption, filtering, etc.). A tibio component is created by an expert to provide a desired operation. The challenge is to provide the most robust capability that will insure proper operation in every situation where this tibio component may be invoked. If instead of using a tibio component from the tibio component gallery, an expert were called each time the tibio component's functionality was needed, the expert would apply his own knowledge base of problem solving skills. Nominally, the expert explores the operating environment to determine what processor will execute the code, how much memory is available, what is the format of the incoming data, what is the data format required for subsequent processing operations, etc. After weighing all of this information along with the expert's personal experience, the expert can write the appropriate code for a specific tibio component instance.

Unfortunately, when a tibio component is created (published) it represents a fixed "package" of functionality that cannot be modified unless a revised edition of the tibio component is published. This tends to limit and restrict the versatility of a tibio component that, by definition, needs to properly interoperate with all other tibio components in every case. The ideal solution would be for a tibio component to encapsulate some of the expert's integration knowledge so that the tibio component could instantiate itself in different ways depending on its operating environment. (The phrase "instantiate itself in different ways" means that the code that the tibio component contributes to a solutions project might be different, might be optimized in some way, depending on factors external to the tibio component.)

The graphical solutions development system comprehends and embodies the concept of a powerful scripting (programming) language. Scripts (i.e. programs) written using the scripting language may be included in a tibio component. The scripting language provides transcendent functions which can provide visibility into "environmental" properties like what processor will execute this tibio component's code, how much memory is available, what is the format of the incoming data, what is the format of the data required for subsequent processing operations, etc. The scripting language permits the expert (who creates a tibio component) to embed a significant measure of his (or her) integration knowledge into the tibio component. Based on the script's ability to interrogate the operating environment, the expert can embed integration knowledge to select (or build) the appropriate code modules and contribute them to the solutions project. The scripting language also provides a tibio component with visibility into nearly every facet of the environment including processor capabilities, clock speed, memory properties, operating system properties, sampling rate, wire and pin information, task loading, as well as viewing and/or negotiation with all other tibio components on a tibio drawing. Figures 17G, 17H, and 17I provide clear examples of tibio component scripts where the tibio component engineer exercised the privilege of embedding personal expertise and integration knowledge into a tibio component. Note: The term "capturing integration knowledge" is a generic concept. Every script represents the embedding or capturing of an expert's integration knowledge. Hence every script shown is a representative example of an expert delivering encapsulated expertise within the tibio component. The OnProperty script of Fig. 17G delivers the expertise concerning which properties the user may want to be able to control. For this Sinewave generator the expert has decided that the user might like to be able to set the frequency and the amplitude. A different expert might consider other properties more important. Continuing this example, the OnDeposit script of Fig.17H is used to copy the appropriate code files from the block to the project. Using this script, the expert delivers his expertise regarding which files are needed (based on user-configured property settings) and his expertise regarding which folders the various files should be copied into. And lastly, the OnAssemble script of Fig.17I delivers the expert's knowledge of how to pass data or events from one tibio component to another (in accordance with the wires that interconnect the various tibio components). In almost every case, a script will be delivering a nugget of expertise that the tibio component designer deemed to be important. Note that this helps create a competitive environment where one tibio component designer can try to offer improved tibio components with the only improvement in the scripts rather than in the actual DSP code modules.

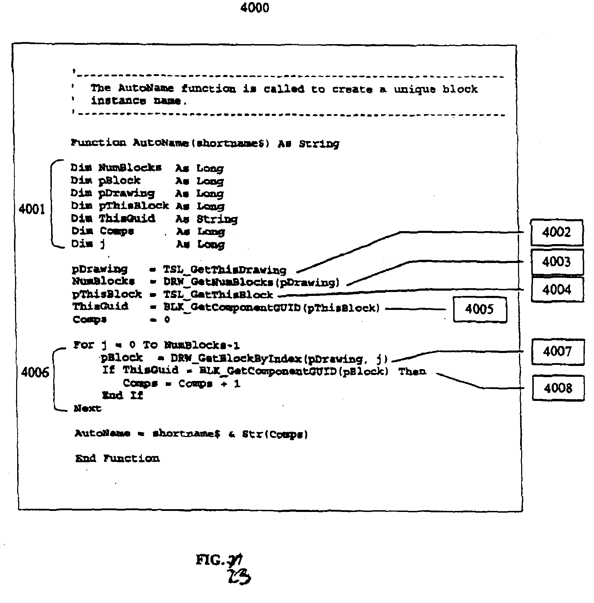

Fig. 23. gives the listing of a function called AutoName 4000 to illustrate how a script may query the environment (in the particular case, the tibio drawing environment) to determine how to achieve a desired result. This function may be included in a tibio component so that when it is instantiated in a tibio drawing that it can automatically pick a suitable unique name. A "shortname" is passed to this function when it is called. The "shortname" is an abbreviation for the tibio component; for example the "shortname" for a Sine Wave Generator might be "SIN". The purpose of this function is to analyze the tibio drawing and count how many instances of the current tibio component there are (e.g. SIN1, SIN2, and SIN3) and automatically generate the proper unique name for the current instance (SIN4). To perform this task, the tibio component must seek information that is outside of the tibio component, i.e. it must examine the environment that it is being placed in. This process begins with statement 4002 where the tibio components queries for a pointer to the current tibio drawing. Code statement 4003 queries for the total number of blocks currently on the tibio drawing. Statement 4004 seeks a pointer to the current block, and statement 4005 queries for the name of the tibio component of which this block is an instance. The software loop 4006 creates an iterative process where each block on the tibio drawing to see how many instances of this same tibio component exist. During each iteration of the loop the statement 4007 gets a pointer to the next (the "j-th") block. An "if" statement 4008 checks to see if the GUID (i.e. the name) of the current block matches the GUID of the "j-th" block. For each match, an instance-count variable (named "Comps") is incremented. The "AutoName" function returns a string that is the concatenation of the "shortname" and the instance count.

Scripting provides capabilities for achieving compatibility (i.e. interoperability) as well as optimization based on user-defined goals. Specific capabilities (enabled via scripting) that may be useful include elimination of parameter range-checking, elimination of data format conversions, re-linking selected code modules, patching code fragments into object modules, etc.

Tibio component scripts can be executed at design-time, at build time, or at run-time (or any combination). There are a host of other design time "events" which may be used to invoke scripts. These include a property-change event, a new-wire event, a new-probe event, and many others.

The expert who creates a tibio component may decide to write the tibio component's code in four different ways. All four code modules can be placed inside a single tibio component at the time that it is published. However when the tibio component is used, the tibio component scripts determine precisely which code module(s) will provide the optimum functionality, and only those modules are contributed to the solutions project.

Although scripts can enhance tibio component functionality, tibio components are not required to have scripts. Also, scripts are one way that a tibio component can "advocate" new rules to the tibio framework.

### C. Visual Paradigm based on Data and Control Flow

***Cf earlier on event passing

### D. Platform Components

The ultimate goal of the graphical solutions development system is to convert a user-generated block diagram on a tibio drawing into real and efficient processor instructions (i.e. a code module) and load this code module onto a real piece of hardware. To properly perform this conversion process, a good bit of information is needed regarding the actual hardware where the code will be executed. Things that are important at build-time may include:
- Processor type
- Processor speed
- Memory map
- Memory speed
- I/O ports- types, locations, properties
- Properties of the software kernel
- Properties of the real time operating system (RTOS)
- Debugging information
- Utilities for testing
- Special compilers or other code-generation tools
- Tibio framework rules that apply to this specific hardware implementation

There needs to be a simple way to capture all of this information and make it easily accessible both to the graphical solutions development system as well as to all tibio components on the tibio drawing. In the preferred embodiment, this is resolved by abstracting the platform as tibio component. A platform tibio component is similar to other tibio components in that it is represented as a block on a tibio drawing, and it can contain many different files. The platform tibio component contains a description of all of the hardware features. This description is captured in a compatible file format so that this information is available to the visual tibio drawing editor for on-the-fly rule checking during the design process.

Placing all of the relevant information for a given hardware platform in a platform tibio component solves many problems. In a tibio drawing this serves as a single repository for all hardware information. Because the platform information is implemented as a " tibio component" in the tibio drawing, all other tibio components in the tibio drawing have access through the power of the scripting language.

The graphical solutions development environment includes the concept of a specialized " tibio component publisher" utility specifically designed and optimized to publish "platform components".

Benefits: same paradigm as all tibio components / can have any needed resources / can be queried from scripts

### E. Tibio frameworks

Regarding tibio frameworks, the data that comprise the rules and the rule engine may be physically distinct, or they may be "hard-coded" into an integrated implementation. A hard-coded implementation makes it more difficult to change rules, but this disadvantage is offset by enhanced execution speed.

Fig.19A gives a listing of several possible tibio framework rules that pertain to blocks. Each rule is assigned a "Rule Number" that is a convenient reference designator. The first rule, "B000", states that every block on a tibio drawing must have a solutions project attribute. Because the GSDS only understands how to "build" and "run" projects, any block that intends to participate must have a proper designation indicating to which project it is assigned.

The script code shown in Fig. 19B implements a function that verifies whether or not, for all the blocks in a given project, rule "B000" is satisfied. Code 2901 queries the GSDS to determine how many blocks are currently in the project. Code 2901 initiates a software loop that enumerates each block in the project. Code 2903 calls the "VerifyAttributeExists" API to determine if each block has a "Project" attribute. This example script demonstrates how a software function can be constructed to verify that a rule is satisfied.

In Fig. 19C, the listing illustrates that a software subroutine can be implemented to iterate through the entire set of "block" rules. In this simple example, each rule violation generates an error message to the user. There are many alternate methods of handling errors including logging them in a file, automatically correcting them, etc.

A complete tibio framework example is provided in Fig. 19D. This tibio framework script code sequentially calls subroutines that verify rules for the workspace, the project, the blocks, and the wires. This simple example is somewhat deceptive. If a more robust tibio framework were invoked to "examine" a non-trivial tibio drawing, the verification process might involve hundreds or thousands of rule-checks. Without the advantage of an automatic rule-checker, it might take an expert programmer hours or days to locate just one rule violation. Thus the tibio framework provides a very potent capability.

Even though a tibio framework may be implemented using "hard-coded" routines, the tibio framework may be partitioned into separate sets of rules. Each set of rules may focus on rules that pertain to one aspect of a tibio drawing, for example: blocks. Further, it is possible that the code that checks a given set of rules be collected into separate tibio framework modules. This leads to the concept of a tibio framework "executive" routine that can call individual tibio framework modules as needed. As shown in Fig. 19E, tibio framework modules can be arranged in a hierarchy. Various modules in the hierarchy may be replaced depending on specific tibio drawing conditions. Consider a tibio drawing where one portion of the tibio drawing pertains to motor control, and another section of the same tibio drawing pertains to speech recognition. (These differences in focus are sometimes referred to as different "problem domains".) In this example it is quite likely that the set of rules for wires in the motor control area will be different from the set of wire rules that apply to the speech recognition "circuitry". A tibio framework executive is able to call the appropriate wiring-rule module depending on which section of the tibio drawing is being analyzed. The exact arrangement of the tibio framework modules in the tibio framework hierarchy may differ substantially from the example given in Fig. 19E.

In some instances a block may recommend a specific tibio framework to govern its operation. In other instances it may contribute its own set of rules that guarantee correct results.

Specialized (custom) versions of the GSDS may be designed with the tibio framework "hardcoded" into the GSDS code. In this case, the tibio framework would be fixed and immutable. In other case, the tibio framework may be a distinct module that can be replaced by the user. In yet another case, the tibio framework may be implemented as tibio components that appear in a GSDS drawing.

Benefits of tibio frameworks:
■ Makes life easier for beginners
■ Reduces/eliminates errors
■ Improves performance
■ Encapsulates intellectual property

These facts are important.
■ Tibio frameworks may be tibio components
■ Tibio frameworks may be aggregates of smaller tibio frameworks
■ Tibio components may add rules to a tibio framework

### F. Real-time Extension to Microsoft COM

The Component Object Model (COM) is a Microsoft standard that is designed to facilitate how software components can interoperate in a generalized or generic way. This is a very powerful standard, and is used to provide unique capabilities in Tibio. Further, because Tibio has a view into the Tibio drawing, the tibio framework, and the platform, COM can be slightly modified or extended to provide many substantial benefits. In Fig. 22A the event wires (between the tibio component-instance blocks and the COM (Server) block) 3903 are implemented using COM technology. The wire connecting the Host Application (not shown in Fig 22A) to the Com Server block 3903 is also implemented using Com technology. The following comments pertain to the way that COM is used and implemented in Tibio (these should be reviewed for patent protection):
**1.** A Tibio drawing can automatically generate a COM interface server that provides the host application with a custom interface to every event wire in the tibio drawing.
**2.** Every event wire that is connected to the COM Server 3903 block defines a portion of the COM interface that is created.
**3.** There are three types of interfaces that can be added: scalars, function values, and COM interfaces.
**4.** The GUID of the COM object represents the actual target code that the tibio drawing generates.
**5.** The interface GUID corresponds to the unique interface that the host uses to communicate with the COM object.
**6.** Subsequent changes to the event wires in the Tibio drawing will modify the interface to the host.
**7.** Both input events and output events of a DSP tibio component can be modeled using COM.
**8.** Tibo components' input events add methods and/or interfaces to the COM object
**9.** Tibio components' output events add COM events to the COM object
**10.** The COM threading models are extended for asymmetric processing
**11.** Since we are generating a custom interface for a DSP target, we can create custom interfaces that are optimized for the specific hardware. (Especially for shared memory model.) This was previously discussed in section on events.
**12.** Normally COM interfaces generate specific code for each method exposed, but Tibio has access to system and context knowledge it can generate much more efficient methods than a generic approach. This typically enhances execution speed.
**13.** To accommodate the real-time nature of DSP processing COM needs Tibio can extend COM. This requires synchronization of processing tasks and other optimizations.

Benefit: COM is a standard that is used by a million Windows programmers every day. (Note that Microsoft defines a COM component slightly differently than the way we define a Tibio component.) COM provides very significant benefits of: 1) provides a standard for how to write COM components, 2) COM components are used in a standard way, regardless if they are running on the same processor, or are running on different kinds of processors at remote locations, 3) COM components can be written in any language, 4) COM includes optional security protocols, and 5) compatible with a variety of network protocols. By using COM as an interface to DSP tibio components and DSP tibio drawings, it permits a million programmers to access complex DSP technology without having to learn anything new. This permits them to use familiar techniques to add incredible new features that are only available from DSP. The fact that the GSDS leverages COM gives them access to DSP with them having to spend several years trying to master DSP technology. This strongly supports the initial Tibio goal of "packaging the expertise of DSP programmers and delivering it to the millions of Windows programmers".

The screen shot of Fig 22A shows a tibio drawing composed of several different blocks. In this tibio drawing, several of the various block's event pins are connected via wires to the COM block 3903. This COM block provides a very special functionality. The purpose of the COM block is to automatically define an standard interface to each of the blocks that is attached to it. In this case, the standard interface is a Microsoft COM interface. Microsoft's public documentation on COM specifies precisely how a COM interface is defined. Once the COM interface is defined, it provides a standard way for any Microsoft Windows program to access the functionality of the tibio drawing. In other words, just by connecting the various event pins (on the tibio drawing) to the COM block 3903, a standard interface to the DSP functionality is automatically generated. This permits the user to instantly expose this DSP functionality to a huge audience of potential users.

Every wire in a tibio drawing is represented in the GSDS as an object with a set of properties. Properties include which pin of which block is connected to each end of the wire. It is very easy for the COM block to iterate through the collection of wires and query each wire object and determine the blocks that are attached to it. With this block and pin information, it is a simple process to query each of the attached blocks to determine what event protocols or methods each block needs for proper operation. COM interfaces are defined by composing a description in a special interface definition language (IDL). Once the interfaces (that need to be exposed) are determined, it is a simple matter to translate this into the corresponding IDL file.

### G. Smart Probes and Viewers

To test, verify, measure performance, or debug a tibio drawing the concept of probes is included in GSDS. It is important to note that probes (even in graphical circuit representations) are not new. The innovation that GSDS=Tibio brings to this scenario is the concept of smart probes based on the ability of Tibio to view the entire design context including the tibio framework, the hardware platform, the individual tibio components and the way that the tibio components are interconnected.

The following comments pertain to why Tibio offers unique probing capabilities.
1. Tibio is designed for applications programmers and for DSP novices who want to get the most relevant information in the quickest and easiest way. Smart Tibio probes facilitate access. The term "smart probe" refers to a feature of the GSDS where, when a probe is attached to a wire, the GSDS can query the properties of the wire to determine the type of a data that the wire is routing. Based on the type of data, the GSDS can provide a list of compatible data viewers.
2. Abstract-data probing refers to fact that the information that would be most helpful may not exist anywhere on a Tibio drawing. But perhaps some mathematical or temporal processing of data that is available can be used to derive a more useful view of abstract data.
3. Tibio uses the entire context of the Tibio drawing along with real-time data exchange (real-time data exchange or "RTDX" refers to a technology developed by Texas Instruments to provide a real-time hardware data-port into an operating microprocessor) to create a view that is friendlier to a novice programmer.
4. Probe hooks (i.e. special probe points) can be placed inside a tibio component to provide more useful data than may be available from the tibio component pins or interconnecting wires alone.
5. Placement of a probe on a tibio drawing gives the complete context of the probe needs, and automatically sets up all viewer functions which may include the RTDX channel and/or other debug hardware on the processor chip.
6. Probing a data wire requires a tibio framework context. Tibio can supply this context automatically to insure that the data is properly captured, formatted and displayed.
7. Probe scripts can be used to capture the expertise of a tibio component engineer of tibio framework engineer and deliver this expertise to Tibio users. A probe script may deliver the expertise that defines how a viewer's settings should be configured for optimal visual presentation. This may include visual cursors on the viewer screen that denote acceptable signal levels, etc.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A visual development method for an application program, comprising the steps of:
(a) displaying first and second blocks instantiating user selected first and second development components, said first block including a first prefabricated program, said second block including a second prefabricated program; and
(b) automatically creating, in response to user input connecting said first and second blocks, proxy and stub code for communication from said first prefabricated program to said second prefabricated program as parts of an application program.

2. The method of claim 1, further comprising the steps of:
(a) displaying third block instantiating user selected third development component, said third block including a third prefabricated program; and
(b) automatically creating, in response to user input connecting said second and third blocks, proxy and stub code for communication from said second prefabricated program to said third prefabricated program as parts of said application program; wherein said communication from said first prefabricated program to said second prefabricated program is of control information and said communication from said second prefabricated program to said third prefabricated program is of data.

3. The method of claim 1 or 2, wherein:
(a) said first prefabricated program runs on a first processor; and
(b) said second prefabricated program runs on a second processor with said second processor differing from said first processor.

4. The method of any preceding claim, wherein:
(a) a development framework creates said proxy and stub code.

5. The method of any one of claims 1 to 3, wherein:
(a) said first block creates said proxy code; and
(b) said second block creates said stub code.

6. A method using a visual development environment for creating a program for a programmable digital signal processor, comprising the steps of:
(a) displaying first and second geometrical shapes corresponding to user selected first and second components, said first component including at least one prefabricated program for a programmable digital signal processor, said second component including at least one prefabricated program for said programmable digital signal processor; and
(b) automatically creating a program for said processor in response to user input connecting said first and second geometrical shapes, said program including said first prefabricated programs modified in response to the presence of said second prefabricated program.

7. A computer program comprising computer program elements for configuring a computer to implement any preceding claim.

8. A computer program comprising computer program elements translatable for configuring a computer to implement the method of any one of claims 1 to 6.

9. A carrier medium carrying a computer program according to claim 7 or 8.

10. A software tool for developing an application program, comprising software elements for:
(a) displaying first and second blocks instantiating user selected first and second development components, said first block including a first prefabricated program, said second block including a second prefabricated program; and
(b) automatically creating, in response to user input connecting said first and second blocks, proxy and stub code for communication from said first prefabricated program to said second prefabricated program as parts of an application program.
